# EUROPEAN PATENT APPLICATION

(11) **EP 4 838 372 A1**
(43) Date of publication of application: **11.11.2026**
(21) Application number: 24916781.8
(22) Date of filing: 30.12.2024
(51) Int. Cl.: G06F 16/22

(54) **DATA PROCESSING METHOD, DATA QUERY METHOD, AND DATA PROCESSING AND QUERY SYSTEM**

(30) Priority: 12.01.2024 CN 202410053441
(71) Applicant: ZTE CORPORATION, Shenzhen, Guangdong 518057 (CN)
(72) Inventor: NIU, Jiahao, Shenzhen, Guangdong 518057 (CN); TU, Yaofeng, Shenzhen, Guangdong 518057 (CN); GAO, Hong, Shenzhen, Guangdong 518057 (CN); HAN, Yinjun, Shenzhen, Guangdong 518057 (CN); XU, Jin, Shenzhen, Guangdong 518057 (CN); WANG, Dezheng, Shenzhen, Guangdong 518057 (CN); GUO, Jinliang, Shenzhen, Guangdong 518057 (CN); GUAN, Yun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/143606
(87) International publication number: WO 2025/148734

(57) **Abstract**

Provided in the present application are a data processing method, a data query method, and a data processing and query system. The data processing method comprises: acquiring first statistical information, wherein the first statistical information comprises column statistical information that is obtained by means of performing statistics on columns of a data table, and the column statistical information comprises a column maximum value and a column minimum value; and on the basis of the first statistical information, generating second statistical information for data query, wherein the second statistical information comprises a column statistical range set, the column statistical range set comprises a plurality of discontinuous intervals, and the plurality of discontinuous intervals are obtained by means of performing interval partitioning on a data range formed by the column maximum value and the column minimum value in the column statistical information.

## Description

### CROSS-REFERENCE TO RELATED APPLICATIONS

The present application claims priority to the Chinese patent application No. 202410053441.1 filed with the CNIPA on January 12, 2024, and entitled "DATA PROCESSING METHOD, DATA QUERY METHOD, AND DATA PROCESSING AND QUERY SYSTEM", the entire content of which is incorporated herein by reference.

### TECHNICAL FIELD

The present application relates to the technical field of data processing, in particular to a data processing method, a data query method, and a data processing and query system.

### BACKGROUND

When data is to be stored in a database, statistics are typically performed on each column of stored data to obtain summary information such as a column maximum value and a column minimum value. Thus, upon receiving a query request, data query may be performed based on a data skipping technology. Data skipping is a technology for performing structured query language (SQL) analysis on structured data. Data skipping stores the summary information such as the column minimum value and the column maximum value for each object (or file, etc.). When performing a data query, the column minimum value and the column maximum value may be used as column indexes. If a range of column index values does not overlap with a data range specified by the query, a query engine will skip the object during scanning, thereby reducing the amount of data scanned for the query, accelerating the query efficiency, and lowering the resource costs.

However, in practical applications, a range between the column maximum value and the column minimum value is often large. Consequently, when performing the data query based on the data skipping technology, the amount of data that is skipped is relatively small, resulting in a need to scan more data during data scanning, and then reducing the query efficiency.

### SUMMARY

The present application provides a data processing method, a data query method, and a data processing and query system.

The present application is implemented as follows.

In a first aspect, a data processing method is provided, including: acquiring first statistical information, wherein the first statistical information includes column statistical information obtained after performing statistics on columns of a data table, and the column statistical information includes a column maximum value and a column minimum value; and generating second statistical information for a data query according to the first statistical information, wherein the second statistical information includes a column statistical range set, the column statistical range set includes a plurality of discontinuous ranges, and the plurality of discontinuous ranges are obtained after performing range partitioning on a data range formed by the column maximum value and the column minimum value in the column statistical information.

In a second aspect, a data query method is provided, including: receiving a query request; acquiring second statistical information of a data table, wherein the second statistical information is obtained based on the data processing method described in the above first aspect; determining, from the data table, a valid object according to the query request and the second statistical information, wherein the valid object includes at least one of a valid table, a valid partition, or a valid file; and querying, from the valid object, target data corresponding to the query request.

In a third aspect, a data processing and query system is provided, including a storage layer and a computation layer. The storage layer acquires first statistical information, wherein the first statistical information includes column statistical information obtained after performing statistics on columns of a data table, and the column statistical information includes a column maximum value and a column minimum value; and generates second statistical information for a data query according to the first statistical information, wherein the second statistical information includes a column statistical range set, the column statistical range set includes a plurality of discontinuous ranges, and the plurality of discontinuous ranges are obtained after performing range partitioning on a data range formed by the column maximum value and the column minimum value in the column statistical information. The computation layer receives a query request; acquires the second statistical information; determines, from the data table, a valid object according to the query request and the second statistical information, wherein the valid object includes at least one of a valid table, a valid partition, or a valid file; and queries, from the valid object, target data corresponding to the query request.

In a fourth aspect, an electronic device is provided, including: a processor; and a memory, configured to store processor-executable instructions; wherein the processor is configured to execute the instructions, so as to implement the method as described in the first aspect or the second aspect.

In a fifth aspect, a computer-readable storage medium is provided, and instructions in the storage medium, when executed by a processor of an electronic device, cause the electronic device to be able to perform the method as described in the first aspect or the second aspect.

### BRIEF DESCRIPTION OF DRAWING(S)

In order to illustrate technical solutions in the present application or in the prior art more clearly, accompanying drawings needing to be used in description of the embodiments or the prior art will be introduced below briefly. Apparently, the accompanying drawings in the description below are only some embodiments recorded in the present application, and those ordinarily skilled in the art may further obtain other accompanying drawings according to these accompanying drawings without creative efforts.
FIG. 1 is a schematic diagram of performing data skipping using a column minimum value and a column maximum value in the related art.
FIG. 2 is a schematic diagram of an exemplary system architecture provided by an embodiment of the present application.
FIG. 3 is a schematic flowchart of a data processing method in an embodiment of the present application.
FIG. 4 is a schematic diagram of a data structure corresponding to first statistical information in an embodiment of the present application.
FIG. 5 is a schematic diagram of generating file-level column statistical information in an embodiment of the present application.
FIG. 6 is a schematic diagram of generating partition-level column statistical information in an embodiment of the present application.
FIG. 7 is a schematic diagram of generating table-level column statistical information in an embodiment of the present application.
FIG. 8 is a schematic diagram of a data structure corresponding to second statistical information in an embodiment of the present application.
FIG. 9 is a schematic flowchart of a data query method in an embodiment of the present application.
FIG. 10 is a schematic diagram of determining a column predicate range set and storing the column predicate range set in an embodiment of the present application.
FIG. 11 is a schematic flowchart of a data query method in another embodiment of the present application.
FIG. 12 is a schematic diagram of performing data skipping according to a column statistical range set in an embodiment of the present application.
FIG. 13 is a schematic structural diagram of an electronic device in an embodiment of the present application.
FIG. 14 is a schematic structural diagram of a data processing apparatus in an embodiment of the present application.
FIG. 15 is a schematic structural diagram of an electronic device in another embodiment of the present application.
FIG. 16 is a schematic structural diagram of a data query apparatus in an embodiment of the present application.
FIG. 17 is a schematic structural diagram of a data processing and query system in an embodiment of the present application.

### DETAILED DESCRIPTION

In more and more scenarios, users expect to be able to quickly analyze data in an interactive manner. Analysis scenarios range from traditional batch processing queries to exploratory and needle-in-a-haystack queries (e.g., point queries), with analysis data object sizes ranging from a few gigabytes to hundreds of petabytes. Linearly scanning such large datasets with massive clusters is very expensive. In practical applications, multi-dimensional analysis generally involves a filter condition, and an analysis result may come from a very small part of an original record set. Theoretically, all irrelevant data may be skipped when reading data, and only a very small amount of required data is read. Data skipping is a technology for performing structured query language (SQL) analysis on structured data. Data skipping stores column summary statistical information (e.g., a minimum value MIN and a maximum value MAX, etc.) in each object (or file, etc.) as column indexes. If a range of column index values does not overlap with a data range specified by the query, a query engine will skip the file during scanning, thereby reducing the amount of data scanned for a given query, accelerating a query speed, and lowering resource costs.

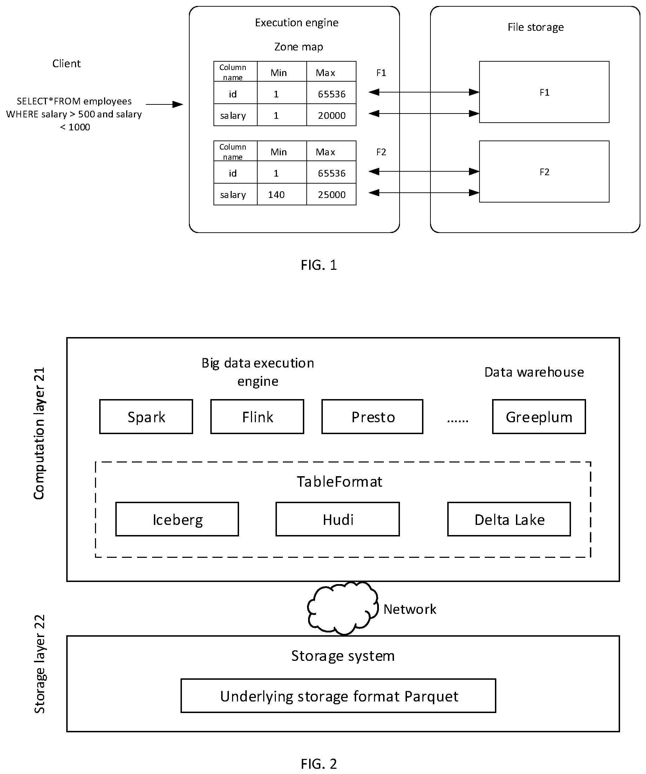

In related art, both database technologies represented by Oracle and data lake technologies represented by Iceberg, Hudi, etc., use a column minimum value and a column maximum value to eliminate partitions on tables with predicates. In an exemplary embodiment, referring to FIG. 1, minimum and maximum column values from ZoneMap of the partitions are aggregated or summarized and associated with the partitions. That is, the two zone maps shown in FIG. 1 are associated with partitions F1 and F2, respectively. The column maximum value and the column minimum value in the zone map associated with F1 are obtained by aggregating column values in F1, and the column maximum value and the column minimum value in the zone map associated with F2 are obtained by aggregating column values in F2. When performing a data query, if the query request includes a filter condition on a certain column, and the minimum and maximum values of that column have been aggregated for partitions, the query engine may determine whether to omit an entire partition from an access path for processing the query according to the column value (or a range of column values) in the filter condition and the aggregated minimum and maximum values. As shown in FIG. 1, the filter condition in the client's query request is "salary > 500 and salary < 1000". In the zone map associated with the partition F1, a column maximum value for salary is 20000 and a column minimum value for salary is 1. In the zone map associated with the partition F2, a column maximum value for salary is 25000 and a column minimum value for salary is 140. Both have an overlapping part with the filter condition. Therefore, the partitions F1 and F2 cannot be skipped, meaning that the partitions F1 and F2 need to be scanned. Similarly, for rapid scan planning, Iceberg uses column-level minimum and maximum values, among others, to eliminate partitions and files that cannot match a query predicate.

However, in practical applications, the range between the column minimum value MIN and the column maximum value MAX may be very large. For example, in some scenarios, if the data is not clustered or sorted on a column, the column maximum value and the column minimum value may be close to or equal the entire range of the column values in the table. Such coarse-grained data statistics may render data skipping according to the column minimum value and the column maximum value ineffective in filtering the partitions or the files, thereby resulting in low query efficiency. For example, in a first zone map shown in FIG. 1, the range between the column minimum value 1 and the column maximum value 20000 for salary is 20000. In a second zone map, the range between the column minimum value 140 and the column maximum value 25000 for salary is 24860. Both data ranges are relatively large. When performing a data query, both have the overlapping parts with the query condition. Consequently, both the partitions F1 and F2 need to be scanned, meaning that the partitions F1 and F2 or the files in the partitions F1 and F2 cannot be skipped, resulting in low query efficiency.

Embodiments of the present application provide a data processing method, a data query method, and a data processing and query system, and specifically propose a data structure of a column statistical range set based on a plurality of discontinuous range set. This data structure is obtained after performing range partitioning on a data range formed by a column maximum value and a column minimum value on the basis of the column maximum value and the column minimum value, thereby narrowing a gap between the column maximum value and the column minimum value, achieving finer-grained partitioning of column statistical data, and thus enabling more accurate and smaller-range description of data distribution features of a data table. After the column statistical range set is obtained, since data query may be performed according to the column statistical range set, a finer-grained judgment can be made as to whether to perform data skipping, thereby effectively filtering out invalid tables, partitions, and files, reducing the range of the data needing to be scanned, and improving the data query efficiency.

In order to make those skilled in the art understand the technical solutions in the present application better, the technical solutions in the present application will be described below clearly and completely with reference to the accompanying drawings in one or more embodiments of the present application. Apparently, the described embodiments are only part of the embodiments of the present application, but not all the embodiments. All other embodiments obtained by those ordinarily skilled in the art based on the embodiments in the present application without making creative efforts should fall within the scope of protection of the present application.

Terms "first," "second" and the like in the present application and the claims are used for distinguishing similar objects, but are not used for describing a specific sequence or precedence order. It should be understood that data used in this way may be interchanged where appropriate, so that the present application can be implemented according to sequences other than those illustrated or described here. In addition, "and/or" in the present application and the claims represents at least one of the connected objects. A character "/" generally represents that the association objects in front of and behind "/" are in an "or" relationship.

FIG. 2 is a schematic diagram of an exemplary system architecture provided by an embodiment of the present application.

An application environment of the system architecture shown in FIG. 2 may be logically divided into a computation layer 21 and a storage layer 22. The computation layer 21 performs data management and access based on the storage layer 22, and the computation layer 21 and the storage layer 22 may be connected via a network. TableFormat is optionally deployed in the computation layer 21. TableFormat is a table format that enables a data lake to have atomicity (or referred to as indivisibility), consistency, isolation (or referred to as independence), and durability (ACID) transactions and enhances a data management capability. Open-source systems such as Iceberg, Hudi, and DeltaLake all belong to open-source products of TableFormat. In practical deployment, the deployment of the computation layer 21 may include but is not limited to the following scenarios (1) to (4):
(1) a standalone big data runtime environment (not based on a TableFormat system), i.e., only a big data execution engine is deployed in the computation layer 21, without deploying a data warehouse or a TableFormat system;
(2) a standalone data warehouse runtime environment (based on a TableFormat system), i.e., only a data warehouse is deployed in the computation layer 21, without deploying a big data execution engine, but with a TableFormat system deployed;
(3) a standalone data warehouse runtime environment (not based on a TableFormat system), i.e., only a data warehouse is deployed in the computation layer 21, without deploying a big data execution engine or a TableFormat system; and
(4) a lake-warehouse integrated runtime environment (co-deployment of a big data execution engine and a data warehouse based on TableFormat), i.e., both the big data execution engine and the data warehouse are deployed in the computation layer 11, and a TableFormat system is deployed.

The runtime environment described in any of (1) to (4) above may be a physical machine environment, a cloud environment, or the like, which is not specifically limited here.

The storage layer 22 provides a data storage capability, and an underlying layer may store data using formats such as Parquet. The storage layer 22 may be cloud storage, local storage, distributed storage, or the like, which is not specifically limited here.

In the related art, when storing data, the storage layer 22 may perform statistics on each stored column of data to obtain a column maximum value and a column minimum value. When performing a data query, the computation layer 21 may perform data skipping based on the column maximum value and the column minimum value to reduce the amount of data scanned for the query. However, in the related art, the data range between the statistically obtained column maximum value and column minimum value is generally relatively large. In a case of performing the data query, when data skipping is performed based on the column maximum value and the column minimum value, the probability that the data range between the column maximum value and the column minimum value overlaps with a data range specified in a query condition is relatively high. Consequently, the amount of data skipped during the data query is relatively small, resulting in the need to scan more data during data scanning, and then reducing the query efficiency. Based on the technical solutions provided in the embodiment of the present application, on the basis of statistically obtaining the column maximum value and the column minimum value, the storage layer 22 may further perform range partitioning on the data range formed by the column maximum value and the column minimum value to obtain a plurality of discontinuous ranges, and then store a column statistical range set formed by the plurality of discontinuous ranges. When performing the data query, the computation layer 21 may perform the data query based on the column statistical range set stored in the storage layer 22. In this way, since range partitioning may be performed on the data range formed by the column maximum value and the column minimum value to obtain the plurality of discontinuous ranges, the gap between the column maximum value and the column minimum value may be narrowed, achieving the finer-grained partitioning of column statistical data, and thus enabling more accurate and smaller-range description of the data distribution features of the data table. When performing the data query, since the data query may be performed based on the column statistical range set formed by the plurality of discontinuous ranges, a finer-grained judgment can be made as to whether to perform data skipping, thereby effectively filtering out invalid tables, partitions, and files, reducing the range of the data needing to be scanned, and improving the data query efficiency.

The technical solutions provided by the embodiments of the present application are described in detail below in combination with the accompanying drawings.

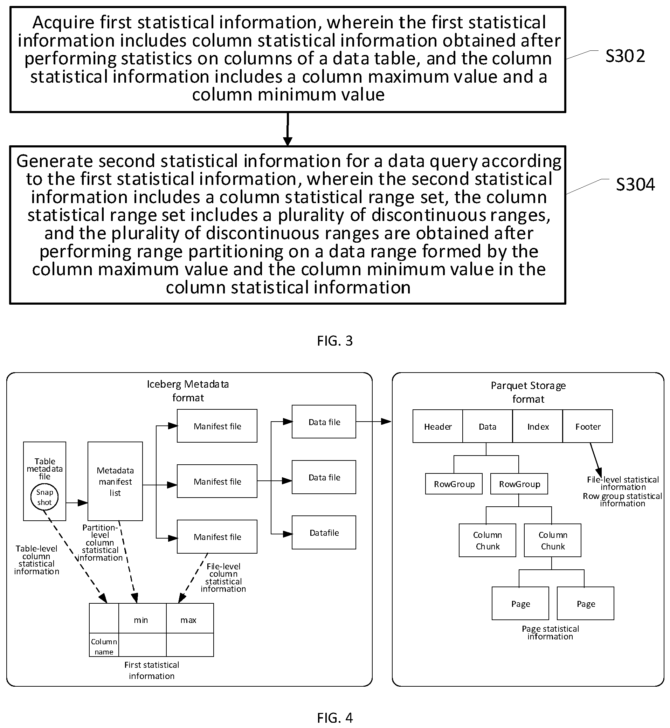

FIG. 3 is a schematic flowchart of a data processing method in an embodiment of the present application. The data processing method shown in FIG. 3 may be executed by a storage layer 22 shown in FIG. 2. The data processing method shown in FIG. 3 is described as follows.

S302: first statistical information is acquired, wherein the first statistical information includes column statistical information obtained after performing statistics on columns of a data table, and the column statistical information includes a column maximum value and a column minimum value.

In a case where data is stored in a database in a form of a data table, the first statistical information relevant to the data table may be acquired. The first statistical information may be column statistical information obtained after performing statistics on data of columns in the data table, and the column statistical information at least includes a column maximum value and a column minimum value.

Optionally, in some implementations, when the data is stored in the form of the data table, a storage granularity of the data table at least may include at least one of a table, a partition, or a file, and when acquiring the first statistical information, the acquired first statistical information at least may include at least one of table-level column statistical information, partition-level column statistical information, or file-level column statistical information. A storage granularity of the table is the largest, followed by that of the partition, and a storage granularity of the file is the smallest. The table-level column statistical information may be column statistical information obtained after performing statistics on the columns of the data table according to the table, the partition-level column statistical information may be column statistical information obtained after performing statistics on the columns of the data table according to the partition, and the file-level column statistical information may be column statistical information obtained after performing statistics on the columns of the data table according to the file.

It should be noted that, in other possible implementations, the storage granularity of the data table may also be other granularities, such as a bucket. Correspondingly, the acquired first statistical information may also include bucket-level column statistical information, and the like. The embodiment of the present application only takes the storage granularity being the table, the partition, and/or the file, and the first statistical information including the table-level column statistical information, the partition-level column statistical information, and/or the file-level column statistical information as examples for description.

The first statistical information may be generated synchronously when data is written, or may be generated through an asynchronous mechanism, which is not specifically limited here. For a specific implementation of generating the first statistical information, reference may be made to specific implementations in the related art, which is not illustrated in detail here. After the first statistical information is generated, the first statistical information may be stored in a metadata table or a metadata file. Thus, when acquiring the first statistical information, the first statistical information may be acquired from the metadata table or the metadata file via an application programming interface (API) manner.

To facilitate understanding of how to acquire the first statistical information, Iceberg may be taken as an example for description. Iceberg is a general TableFormat (data organization format) that may provide read-write and metadata management functions for a big data engine. Its first statistical information is generally written as a system table or metadata into a metadata system, and accessed by a query engine for query optimization processing. The metadata format of Iceberg may be seen in FIG. 4.

As shown in FIG. 4, after Iceberg performs statistics on column data in the data table according to a table level, a partition level, and a file level respectively and obtains the table-level column statistical information, the partition-level column statistical information, and the file-level column statistical information, these pieces of column statistical information may be managed as metadata. These pieces of column statistical information may be stored in a form of a logical structure table, which includes a column name, a column minimum value, and a column maximum value.

In FIG. 4, the table-level column statistical information may be maintained in an Iceberg's table metadata file, which tracks a table schema, a partition configuration, and a snapshot of a table content. The snapshot represents a state of the table at a certain time and is used to access a complete set of data file set in the table. The partition-level column statistical information may be stored in an Iceberg's manifest list. The manifest list is used to store manifest metadata, including partition statistical information and a data file count, and these pieces of statistical information are used to avoid reading and operating unnecessary manifests. The file-level column statistical information may be tracked by one or more manifest files. The manifest file contains partition data and column-level statistical information for each data file in the table. The data files may be stored in a Parquet columnar file format. The data portion of a Parquet file is divided into a plurality of row groups (RowGroup). A plurality of columns are stored in each row group, and each column may be divided into a plurality of pages. The final data portion is stored at the page level. The metadata of the Parquet file is stored at a file footer, and a column statistical value in the row group includes a maximum value, a minimum value, and the like of the column.

Based on the metadata shown in FIG. 4, when acquiring the first statistical information, if the first statistical information includes the table-level column statistical information, the first statistical information may be acquired from the table metadata file; if the first statistical information includes the partition-level column statistical information, the first statistical information may be acquired from the manifest list; and if the first statistical information includes the file-level column statistical information, the first statistical information may be acquired from the manifest file. When acquired from the table metadata file, the manifest list, or the manifest file, the first statistical information may be acquired via the API manner.

S304: second statistical information for a data query is generated according to the first statistical information, wherein the second statistical information includes a column statistical range set, the column statistical range set includes a plurality of discontinuous ranges, and the plurality of discontinuous ranges are obtained after performing range partitioning on a data range formed by the column maximum value and the column minimum value in the column statistical information.

After acquiring the first statistical information, the second statistical information may be generated according to the first statistical information. The second statistical information may be used for the data query.

When generating the second statistical information according to the first statistical information, range partitioning may be performed on the data range formed by the column maximum value and the column minimum value in the first statistical information to obtain the plurality of discontinuous ranges. A set formed by the plurality of discontinuous ranges may be represented as the column statistical range set. After obtaining the column statistical range set, the column statistical range set may be determined as the second statistical information. Thus, the second statistical information may be generated according to the first statistical information.

A range may be used to define a range boundary of a continuous span, and this continuous span is of a comparable type, which is used to acquire a group of numbers/strings within a specific range. After the data range formed by the column maximum value and the column minimum value is partitioned, the obtained plurality of discontinuous ranges are non-empty and disjoint ranges, which may include at least one of an open range, a closed range, a half-open range, a range without an upper bound, or a range without a lower bound. That is, each range may be the open range, the closed range, the half-open range, the range without the upper bound, or the range without the lower bound. A data type of a range value of each range includes but is not limited to at least one of an integral type, a floating-point type, or a character string type. The set (union) formed by the plurality of discontinuous ranges may be represented as the column statistical range set, i.e., the column statistical range set may include the plurality of discontinuous ranges. As an optional manner, the range set may be described using Guava's RangeSet, and the range may be described using Range. Guava is an open-source Java library that provides the Range type for defining the range boundary of the continuous span. On this basis, Guava further provides RangeSet for maintaining a set of multiple segments of range boundaries.

It should be noted that a generation manner of the second statistical information may support real-time generation or asynchronous generation. A generation process of the second statistical information may be superimposed on a generation process of the first statistical information. If the first statistical information is generated in real time, the second statistical information may be generated in real time after the first statistical information is generated in real time. If the first statistical information is generated asynchronously, the second statistical information is further generated after the first statistical information is generated.

Optionally, in some implementations, the first statistical information may include at least one of the table-level column statistical information, the partition-level column statistical information, or the file-level column statistical information. On this basis, when generating the second statistical information according to the first statistical information, the column statistical range set in the generated second statistical information may include at least one of a table-level column statistical range set, a partition-level column statistical range set, or a file-level column statistical range set. The file-level column statistical range set may be a column value range set of an underlying data file, and may be obtained after performing range partitioning on the data range formed by the column maximum value and the column minimum value included in the file-level column statistical information. The partition-level column statistical range set may be a column value range set of a partition, and may be obtained after performing range partitioning on the data range formed by the column maximum value and the column minimum value included in the partition-level column statistical information. The table-level column statistical range set may be a column value range set of a table, and may be obtained after performing range partitioning on the data range formed by the column maximum value and the column minimum value included in the table-level column statistical information.

As an embodiment, generating the second statistical information according to the first statistical information may include the following steps:
in a case where the first statistical information includes the file-level column statistical information, at least one of a file-level column statistical range set or a partition-level column statistical range set is generated according to the file-level column statistical information, wherein the second statistical information includes at least one of the file-level column statistical range set or the partition-level column statistical range set; and
in a case where the first statistical information includes the partition-level column statistical information, a table-level column statistical range set is generated according to the partition-level column statistical information, wherein the second statistical information includes the table-level column statistical range set.

In an exemplary embodiment, when generating the second statistical information according to the first statistical information, if the first statistical information includes the file-level column statistical information, the generated second statistical information may be the file-level column statistical range set, or the partition-level column statistical range set, or both the file-level column statistical range set and the partition-level column statistical range set. If the first statistical information includes the partition-level column statistical information, the generated second statistical information may be the table-level column statistical range set. If the first statistical information includes the file-level column statistical information and the partition-level column statistical information, the generated second statistical information may be at least one of the table-level column statistical range set, the partition-level column statistical range set, or the file-level column statistical range set.

In some implementations, the file-level column statistical information may include a column maximum value and a column minimum value of each column in each row group of each file, and on this basis, when generating the file-level column statistical range set according to the file-level column statistical information, the following steps may be included:
for each file, the following operations are performed:
acquiring a column maximum value and a column minimum value of each column included by each row group in the file;
determining, for each column in each row group, one closed range according to the column maximum value and the column minimum value; and
merging, for each column, a plurality of closed ranges corresponding to the column in a plurality of row groups of the file, and determining a plurality of discontinuous ranges obtained by merging as the file-level column statistical range set corresponding to the column.

In an exemplary embodiment, the file-level column statistical information may be column statistical information for each underlying file. Each underlying file may include a plurality of row groups, and each row group may include a plurality of columns (the plurality of columns in each row group have the same column names). Correspondingly, the file-level column statistical information may include column statistical information of each row group in the plurality of underlying files, and the column statistical information of each row group may include the column maximum value and the column minimum value of each column in the row group. When generating the file-level column statistical range set according to the file-level column statistical information, for each file (i.e., underlying file), the column maximum value and the column minimum value of each column of each row group in the file may be determined according to the file-level column statistical information. Then, for each column in each row group, one closed range is determined according to the column maximum value and the column minimum value of the column. The closed range may be a range formed by the column maximum value and the column minimum value, i.e., [column minimum value, column maximum value]. Finally, for each column, the plurality of closed ranges corresponding to the column in the plurality of row groups of the file may be merged to obtain the plurality of discontinuous ranges. A set formed by the plurality of discontinuous ranges is the file-level column statistical range set corresponding to the column. Based on the same method, a file-level column statistical range set corresponding to each column in the file may be obtained.

For one file, after obtaining the file-level column statistical range set for each column in the file based on the above method, the file-level column statistical range set for each column in other files in the database may be obtained based on the same method, and ultimately, the respective file-level column statistical range sets of the plurality of files may be obtained.

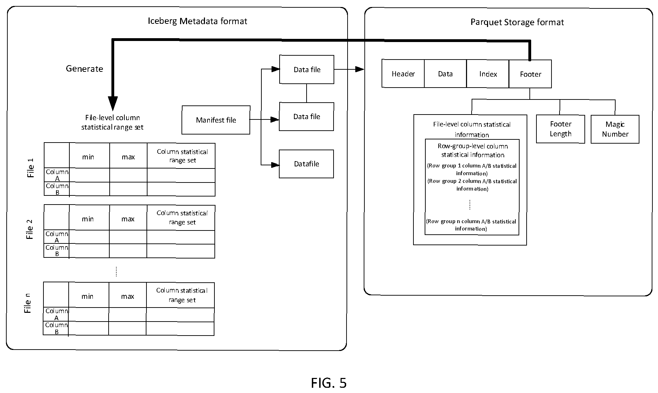

For ease of understanding, reference may be made to FIG. 5.

FIG. 5 takes the Parquet format as an example. The file footer stores the metadata information and some statistical information of the Parquet file, and the footer serves as an entry for the entire file. In FIG. 5, when generating the file-level column statistical range set according to the file-level column statistical information, the following steps may be included.

Step 1: the underlying data file (DataFile) is read through an API, and footer information of the file is read.

The footer information of the file includes the file-level column statistical information. The column statistical information includes the column maximum value and the column minimum value of each column (only column A and column B are shown in FIG. 5) in each row group of each underlying file.

Step 2: for each file, the column maximum values and the column minimum values of all the columns of each row group in the file are acquired one by one. For each column, the following processing is performed:
Step 2.1: the column maximum value and the column minimum value of the column in each row group are synthesized into one closed range, so as to obtain a plurality of closed ranges corresponding to the plurality of row groups, with one row group corresponding to one closed range. For example, if a column minimum value of column A in row group 1 is 1 and a column maximum value is 5, thus one closed range [1, 5] may be obtained; if a column minimum value of column A in row group 2 is 7 and a column maximum value is 10, thus one closed range [7, 10] may be obtained; and if a column minimum value of column A in row group 3 is 8 and a column maximum value is 15, thus one closed range [8, 15] may be obtained.
Step 2.2: the plurality of closed ranges corresponding to the column in the plurality of row groups are merged to obtain the file-level column statistical range set corresponding to the column. When merging, all connected ranges are merged, and empty ranges are ignored, so that a set of the plurality of discontinuous ranges may be ultimately obtained, and the set is the file-level column statistical range set corresponding to the column. For example, after the three closed ranges [1, 5], [7, 10], and [8, 15] corresponding to column A described above are merged, a plurality of discontinuous ranges [1, 5] and [7, 15] may be obtained, and the corresponding column statistical range set is [1, 5]∪[7, 15].
Step 2.3: the above steps 2.1 and 2.2 are performed for each column until processing of all the columns is completed.

After the file-level column statistical information for one file is generated based on step 2 above, the file-level column statistical range sets for other files may be generated in the same manner, the file-level column statistical range sets for the plurality of files may be obtained ultimately.

FIG. 5 shows the respective file-level column statistical range sets of n files within one partition, where all the file-level column statistical range set have the same logical structure. Taking file 1 as an example, the column statistical range set of file 1 may include the column maximum value, the column minimum value, and the column statistical range set of each column (only column A and column B are shown in FIG. 5) in file 1. The column minimum value of column A may be a minimum value of column A in all row groups of file 1, the column maximum value of column A may be a maximum value of column A in all row groups of file 1, and the column statistical range value of column A is a plurality of discontinuous ranges obtained after merging the closed ranges corresponding to the column maximum value and column minimum value of column A in each row group of file 1.

In some implementations, the file-level column statistical information may include a column maximum value and a column minimum value of each column of each file in each partition, and on this basis, when generating the partition-level column statistical range set according to the file-level column statistical information, the following steps may be included:
for each partition, the following operations are performed:
acquiring a column maximum value and a column minimum value of each column included by each file in the partition;
determining, for each column in each file, one closed range according to the column maximum value and the column minimum value; and
merging, for each column, a plurality of closed ranges corresponding to the column in a plurality of files of the partition, and determining a plurality of discontinuous ranges obtained by merging as the partition-level column statistical range set corresponding to the column.

In an exemplary embodiment, the file-level column statistical information may be column statistical information for each underlying file in the partition. Each partition may include a plurality of underlying files, and each underlying file may include a plurality of columns (the plurality of columns of each file in each partition have the same column names). Correspondingly, the file-level column statistical information may include column statistical information of each file in the plurality of partitions, and the column statistical information of each file may include the column maximum value and the column minimum value of each column in the file. When generating the partition-level column statistical range set according to the file-level column statistical information, the column maximum value and the column minimum value of each column included by each file in the partition may be determined according to the file-level column statistical information. Then, for each column in each file, one closed range is determined according to the column maximum value and the column minimum value of the column. The closed range may be a range formed by the column maximum value and the column minimum value, i.e., [column minimum value, column maximum value]. Finally, for each column, the plurality of closed ranges corresponding to the column in the plurality of files of the partition may be merged to obtain the plurality of discontinuous ranges. A set formed by the plurality of discontinuous ranges is the partition-level column statistical range set corresponding to the column. Based on the same method, a partition-level column statistical range set corresponding to each column in the partition may be obtained.

For one partition, after obtaining the partition-level column statistical range set for each column in the partition based on the above method, the partition-level column statistical range set for each column in other partitions in the database may be obtained based on the same method, and ultimately, the respective partition-level column statistical range sets of the plurality of partitions may be obtained.

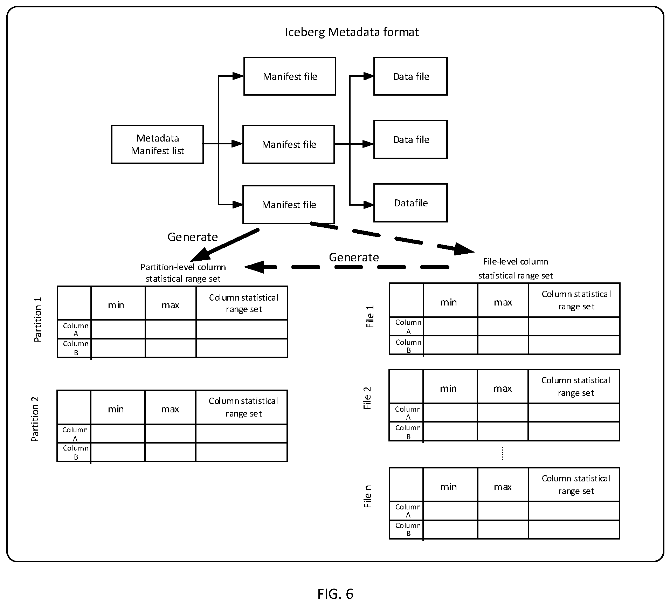

For ease of understanding, reference may be made to FIG. 6.

In FIG. 6, when generating the partition-level column statistical range set according to the file-level column statistical information, the following steps may be included.

Step 1: pieces of file-level column statistical information of all files under a plurality of partitions are acquired from a manifest file.

Each partition includes a plurality of files, and the file-level column statistical information of each file includes the column maximum value and column minimum value of each column of the file.

Step 2: for each partition, the column maximum values and the column minimum values of all the columns of each file in the partition are acquired one by one. For each column, the following processing is performed:
Step 2.1: the column maximum value and the column minimum value of the column in each file are synthesized into one closed range, so as to obtain a plurality of closed ranges corresponding to the plurality of files, with one file corresponding to one closed range. For example, if a column minimum value of column A in file 1 is 1 and a column maximum value is 15, thus one closed range [1, 15] may be obtained; if a column minimum value of column A in file 2 is 5 and a column maximum value is 30, thus one closed range [5, 30] may be obtained; and if a column minimum value of column A in file 3 is 36 and a column maximum value is 110, thus one closed range [36, 110] may be obtained.
Step 2.2: the plurality of closed ranges corresponding to the column in the plurality of files are merged to obtain the partition-level column statistical range set corresponding to the column. When merging, all connected ranges are merged, and empty ranges are ignored, so that a set of the plurality of discontinuous ranges may be ultimately obtained, and the set is the partition-level column statistical range set corresponding to the column. For example, a plurality of discontinuous ranges after the three closed ranges [1, 15], [5, 30], and [36,110] corresponding to column A described above are merged are [1, 30] and [36, 110], and the corresponding column statistical range set is [1, 30]∪[36, 110].
Step 2.3: the above steps 2.1 and 2.2 are performed for each column until processing of all the columns is completed.

After the partition-level column statistical information for one partition is generated based on step 2 above, the partition-level column statistical range sets for other partitions may be generated based on the same manner, and the partition-level column statistical range sets for the plurality of partitions may be obtained ultimately.

FIG. 6 shows partition-level column statistical range sets of two partitions, where both the partition-level column statistical range sets have the same logical structure. Taking partition 1 as an example, the column statistical range set of partition 1 may include the column maximum value, the column minimum value, and the column statistical range set of each column (only column A and column B are shown in FIG. 6) in partition 1. The column minimum value of column A may be a minimum value of column A in all files of partition 1, the column maximum value of column A may be a maximum value of column A in all files of partition 1, and the column statistical range value of column A is a plurality of discontinuous ranges obtained after merging the closed ranges corresponding to the column maximum value and column minimum value of column A in each file of partition 1.

In some implementations, the partition-level column statistical information may include a column maximum value and a column minimum value of each column in each partition, and on this basis, when generating the table-level column statistical range set according to the partition-level column statistical information, the following steps may be included:
performing, for each table, the following operations:
acquiring a column maximum value and a column minimum value of each column included by each partition in the table;
determining, for each column in each partition, one closed range according to the column maximum value and the column minimum value; and
merging, for each column, a plurality of closed ranges corresponding to the column in a plurality of partitions of the table, and determining a plurality of discontinuous ranges obtained by merging as the table-level column statistical range set corresponding to the column.

In an exemplary embodiment, the table-level column statistical information may be column statistical information for each partition in the table. Each table may include a plurality of partitions, and each partition may include a plurality of columns (the plurality of columns in each partition have the same column names). Correspondingly, the table-level column statistical information may include column statistical information of each partition in a plurality of tables, and the column statistical information of each partition may include the column maximum value and the column minimum value of each column in the partition. When generating the table-level column statistical range set according to the partition-level column statistical information, the column maximum value and the column minimum value of each column included by each partition in the table may be determined according to the partition-level column statistical information. Then, for each column in each partition, one closed range is determined according to the column maximum value and the column minimum value of the column. The closed range may be a range formed by the column maximum value and the column minimum value, i.e., [column minimum value, column maximum value]. Finally, for each column, the plurality of closed ranges corresponding to the column in the plurality of partitions of the table may be merged to obtain the plurality of discontinuous ranges. A set formed by the plurality of discontinuous ranges is the table-level column statistical range set corresponding to the column. Based on the same method, a table-level column statistical range set corresponding to each column in the table may be obtained.

For one table, after obtaining the table-level column statistical range set for each column in the table based on the above method, the table-level column statistical range set for each column in other tables in the database may be obtained based on the same method, and ultimately, the respective table-level column statistical range sets of the plurality of tables may be obtained.

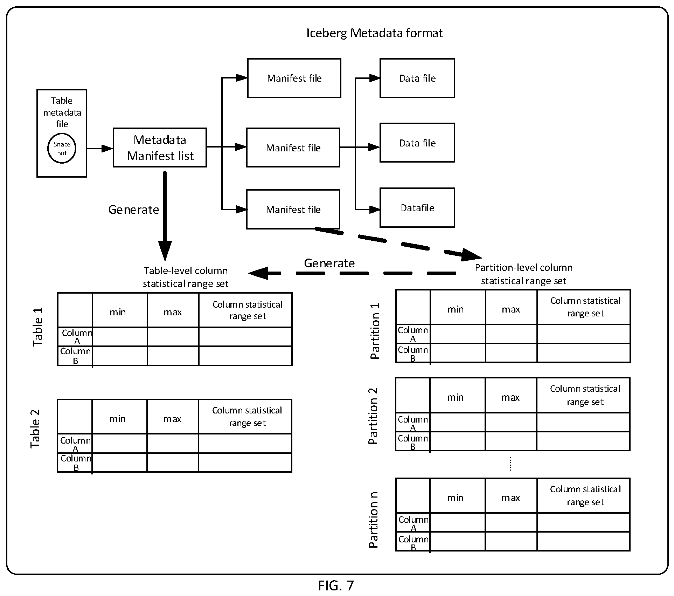

For ease of understanding, reference may be made to FIG. 7.

In FIG. 7, when generating the table-level column statistical range set according to the partition-level column statistical information, the following steps may be included.

Step 1: pieces of partition-level column statistical information of all partitions under a plurality of tables are acquired from a manifest list.

Each table includes a plurality of partitions, and the partition-level column statistical information of each partition includes the column maximum value and column minimum value of each column of the partition.

Step 2: for each table, the column maximum values and the column minimum values of all the columns of each partition in the table are acquired one by one. For each column, the following processing is performed:
Step 2.1: the column maximum value and the column minimum value of the column in each partition are synthesized into one closed range, so as to obtain a plurality of closed ranges corresponding to the plurality of partitions, with one partition corresponding to one closed range. For example, if a column minimum value of column A in partition 1 is 1 and a column maximum value is 30, thus one closed range [1, 30] may be obtained; if a column minimum value of column A in partition 2 is 40 and a column maximum value is 100, thus one closed range [40, 100] may be obtained; and if a column minimum value of column A in partition 3 is 36 and a column maximum value is 200, thus one closed range [36, 200] may be obtained.
Step 2.2: the plurality of closed ranges corresponding to the column in the plurality of partitions are merged to obtain the table-level column statistical range set corresponding to the column. When merging, all connected ranges are merged, and empty ranges are ignored, so that a set of the plurality of discontinuous ranges may be ultimately obtained, and the set is the table-level column statistical range set corresponding to the column. For example, a plurality of discontinuous ranges after the three closed ranges [1, 30], [40, 100], and [36, 200] corresponding to column A described above are merged are [1, 30] and [36, 200], and the corresponding column statistical range set is [1, 30]∪[36, 200].
Step 2.3: above steps 2.1 and 2.2 are performed for each column until processing of all the columns is completed.

After the table-level column statistical information for one table is generated based on step 2 above, the table-level column statistical range sets for other tables may be generated in the same manner, and the table-level column statistical range sets for the plurality of tables may be obtained ultimately.

FIG. 7 shows table-level column statistical range sets of two tables, where both the table-level column statistical range sets have the same logical structure. Taking table 1 as an example, the column statistical range set of table 1 may include the column maximum value, the column minimum value, and the column statistical range set of each column (only column A and column B are shown in FIG. 7) in table 1. The column minimum value of column A may be a minimum value of column A in all partitions of table 1, the column maximum value of column A may be a maximum value of column A in all partitions of table 1, and the column statistical range value of column A is a plurality of discontinuous ranges obtained after merging the closed ranges corresponding to the column maximum value and column minimum value of column A in each partition of table 1.

Optionally, in some implementations, in a case of generating the file-level column statistical range set according to the file-level column statistical information, the partition-level column statistical range set may further be generated according to the file-level column statistical range set. That is to say, when generating the column statistical range set according to the file-level column statistical information, a progressive approach may be adopted: first generating the file-level column statistical range set according to the file-level column statistical information, and then generating the partition-level column statistical range set according to the file-level column statistical range set (in this case, the step of generating the partition-level column statistical range set according to the file-level column statistical information may be omitted). This bottom-up and layer-by-layer aggregation method for generating the column statistical range set has high universality, high efficiency in constructing the column statistical range set, and low modification cost for the execution engine, and is imperceptible to and has no impact on an upper-layer application program. Moreover, since the file-level column statistical range set can achieve a finer-grained partitioning of column statistical data compared to the file-level column statistical information, the partition-level column statistical range set generated according to the file-level column statistical range set can describe the data distribution features of the data table more accurately and within a smaller range compared to the partition-level column statistical range generated according to the file-level column statistical information. When performing the data query, a finer-grained judgment can be made as to whether to perform data skipping, thereby effectively filtering out invalid partitions, reducing the range of data needing to be scanned, and improving the data query efficiency.

When generating the partition-level column statistical range set according to the file-level column statistical range set, the following steps may be included:
for each partition, the following operations are performed:
acquiring the file-level column statistical range set corresponding to each column included by each file in the partition; and
merging, for each column, a plurality of file-level column statistical range sets corresponding to the column in a plurality of files of the partition, and determining a plurality of discontinuous ranges obtained by merging as the partition-level column statistical range set corresponding to the column.

In an exemplary embodiment, each partition may include a plurality of files, and each file may include a plurality of columns. Correspondingly, the file-level column statistical range set may include respective column statistical range sets of the plurality of files, and the column statistical range set of each file may include the file-level column statistical range set corresponding to each column in the file. When generating the partition-level column statistical range set according to the file-level column statistical range set, for each partition, the column statistical range set corresponding to each column of each file in the partition may be determined according to the file-level column statistical range set of the partition. Then, for each column, the column statistical range set corresponding to the column in each file may be merged. The range set formed by the plurality of discontinuous ranges obtained by merging is the partition-level column statistical range set corresponding to the column. Based on the same method, the partition-level column statistical range set corresponding to each column may be obtained.

For example, partition 1 includes three files, each file includes column A, a file-level column statistical range set corresponding to column A in file 1 is [1, 30]∪[36, 100], a file-level column statistical range set corresponding to column A in file 2 is [5, 20]∪[50, 150], and a file-level column statistical range set corresponding to column A in file 3 is [-10, 15]∪[100, 300]. Then, when determining the partition-level column statistical range set for column A, the column statistical range sets corresponding to column A in file 1, file 2, and file 3 may be merged, i.e., [1, 30]∪[36, 100], [5, 20]∪[50, 150] and [-10, 40]∪[100, 300] are merged to obtain a plurality of discontinuous ranges [-10, 30] and [36, 300]. The partition-level column statistical range set for column A is then [-10, 30]∪[36, 300].

Optionally, in some implementations, in a case of generating the partition-level column statistical range set according to the file-level column statistical information or generating the partition-level column statistical range set according to the file-level column statistical range set, the table-level column statistical range set may also be generated according to the partition-level column statistical range set. That is to say, after generating the partition-level column statistical range set, the table-level column statistical range set may further be generated according to the partition-level column statistical range set (in this case, the step of generating the table-level column statistical range set according to the partition-level column statistical information may be omitted). This bottom-up and layer-by-layer aggregation method for generating the column statistical range set has high universality, high efficiency in constructing the column statistical range set, and low modification cost for the execution engine, and is imperceptible to and has no impact on an upper-layer application program. Moreover, since the partition-level column statistical range set can achieve a finer-grained partitioning of column statistical data compared to the partition-level column statistical information, the table-level column statistical range set generated according to the partition-level column statistical range set can describe the data distribution features of the data table more accurately and within a smaller range compared to the table-level column statistical range generated according to the partition-level column statistical information. When performing the data query, a finer-grained judgment can be made as to whether to perform data skipping, thereby effectively filtering out invalid tables, and improving the data query efficiency.

When generating the table-level column statistical range set according to the partition-level column statistical range set, the following steps may be included:
for each table, the following operations are performed:
acquiring the partition-level column statistical range set corresponding to each column included by each partition in the table; and
merging, for each column, a plurality of partition-level column statistical range sets corresponding to the column in a plurality of partitions of the table, and determining a plurality of discontinuous ranges obtained by merging as the table-level column statistical range set corresponding to the column.

In an exemplary embodiment, each table may include a plurality of partitions, and each partition may include a plurality of columns. Correspondingly, the partition-level column statistical range set may include respective column statistical range sets of the plurality of partitions, and the column statistical range set of each partition may include the partition-level column statistical range set corresponding to each column in the partition. When generating the table-level column statistical range set according to the partition-level column statistical range set, for each table, the column statistical range set corresponding to each column of each partition in the table may be determined according to the partition-level column statistical range set of the table. Then, for each column, the column statistical range set corresponding to the column in each partition may be merged. The range set formed by the plurality of discontinuous ranges obtained by merging is the table-level column statistical range set corresponding to the column. Based on the same method, the table-level column statistical range set corresponding to each column may be obtained.

For example, table 1 includes two partitions, each partition includes column A, a partition-level column statistical range set corresponding to column A in partition 1 is [-10, 30]∪[36, 300], and a partition-level column statistical range set corresponding to column A in partition 2 is [-100, 0]∪[50, 500]∪[600, 1000]. Then, when determining the table-level column statistical range set for column A, the column statistical range sets corresponding to column A in partition 1 and partition 2 may be merged, i.e., [-10, 30]∪[36, 300] and [-100, 0]∪[50, 500]∪[600, 1000] are merged to obtain a plurality of discontinuous ranges [-100, 30], [36, 500] and [600, 1000]. The table-level column statistical range set for column A is then [-100, 30]∪[36, 500]∪[600, 1000].

The above describes in detail how to generate the second statistical information according to the first statistical information. The generation manner include generating the column statistical range set according to the column statistical information, and generating the column statistical range set according to the column statistical range set. It should be noted that, to improve the construction efficiency of the column statistical range set and reduce the modification cost on the execution engine, the column statistical range set may be generated in a bottom-up and layer-by-layer aggregation manner. Optionally, the column statistical range set is generated according to the column statistical information. For example, in a case where the first statistical information includes the file-level column statistical information and the partition-level column statistical information, the file-level column statistical range set is generated according to the file-level column statistical information, then the partition-level column statistical range set is generated according to the file-level column statistical range set, and finally the table-level column statistical range set is generated according to the partition-level column statistical range set. Optionally, the file-level column statistical range set and the partition-level column statistical range set are generated according to the file-level column statistical information, and the table-level column statistical range set is generated according to the partition-level column statistical information. It should also be noted that, when generating the column statistical range set, the type of the column statistical range set to be generated may be determined according to the acquired first statistical information, or may also be determined according to actual requirements, which is not specifically limited here. For example, if the first statistical information includes the partition-level column statistical information, then when generating the column statistical range set, the table-level column statistical range set may be generated. If the first statistical information includes the file-level column statistical information, then when generating the column statistical range set, at least one of the file-level column statistical range set, the partition-level column statistical range set, or the table-level column statistical range set may be generated. For another example, in an actual query scenario, if it is necessary to filter the partitions, then when generating the column statistical range set, only the partition-level column statistical range set may be generated. If it is necessary to filter the partitions and the files, then when generating the column statistical range set, the file-level column statistical range set and the partition-level column statistical range set may be generated.

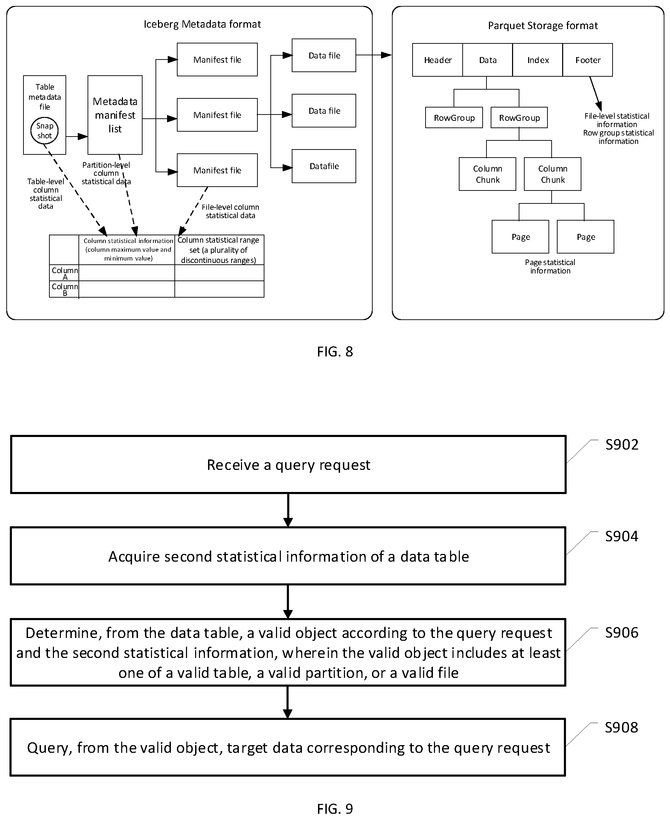

Optionally, in some implementations, after generating the second statistical information according to the first statistical information, the second statistical information may be stored. The second statistical information may be used for a data query. In an exemplary embodiment, when performing the data query, whether a data table, a partition, and/or a file meet/meets a query filter condition may be judged according to the second statistical information, thereby determining whether to perform data skipping. For a specific implementation of performing the data query based on the second statistical information, reference may be made to the embodiment shown in FIG. 9, which is not illustrated in detail here.

When storing the second statistical information, in some implementations, the second statistical information may be stored as extended information of the first statistical information. For example, in a case where the first statistical information includes the file-level column statistical information, the partition-level column statistical information, and the table-level column statistical information, and the second statistical information includes the file-level column statistical range set, the partition-level column statistical range set, and the table-level column statistical range set, the file-level column statistical range set may be stored as extended information of the file-level column statistical information, the partition-level column statistical range set may be stored as extended information of the partition-level column statistical information, and the table-level column statistical range set may be stored as extended information of the table-level column statistical information.

By storing the second statistical information as the extended information of the first statistical information, the impact on an existing system may be reduced, and storage and maintenance costs may be saved.

Taking Lceberg as an example, when storing the second statistical information as the extended information of the first statistical information, the storage manner may be as shown in FIG. 8. In FIG. 8, the table-level column statistical information in the first statistical information is stored in a table metadata file, the partition-level column statistical information is stored in a manifest list, and the file-level column statistical information is stored in a manifest file. After generating the second statistical information according to the first statistical information, when storing the second statistical information, the table-level column statistical range set in the second statistical information may be stored as the extended information of the table-level column statistical information in the table metadata file (in FIG. 8, the table-level column statistical information and the table-level column statistical range set are collectively represented as table-level column statistical data), the partition-level column statistical range set may be stored as the extended information of the partition-level column statistical information in the manifest list (in FIG. 8, the partition-level column statistical information and the partition-level column statistical range set are collectively represented as partition-level column statistical data), and the file-level column statistical range set may be stored as the extended information of the file-level column statistical information in the manifest file (in FIG. 8, the file-level column statistical information and the file-level column statistical range set are collectively represented as file-level column statistical data).

When storing the second statistical information, different pieces of second statistical information may have the same storage structure. For example, when storing the table-level column statistical range set, a column of data may be added to the table-level column statistical information, and this added column of data is the table-level column statistical range set. Similarly, when storing the partition-level column statistical range set and the file-level column statistical range set, the same method may be used for storage. As shown in FIG. 8, when storing the column statistical range set, a column may be newly added to a right side of the column statistical information, and the column statistical range set is stored in the newly added column.

In other implementations, when storing the second statistical information, the second statistical information may also be stored independently of the first statistical information, i.e., the second statistical information and the first statistical information are stored separately. A storage location of the second statistical information may be the same as or different from a storage location of the first statistical information, which may be determined according to actual requirements and is not specifically limited here. For example, if the first statistical information is stored in a metadata table or a metadata file, when storing the second statistical information, the second statistical information may also be stored in the metadata table or the metadata file, but stored independently of the first statistical information. Alternatively, the second statistical information may also be stored in a location other than the metadata table or the metadata file.

Optionally, in some implementations, when the first statistical information changes, in order to ensure the accuracy of the second statistical information, the second statistical information needs to be updated. When updating, to improve the update efficiency, it is possible to first determine which parts of the first statistical information have changed, and then generate the corresponding second statistical information according to the first statistical information that has changed. For a specific implementation of generating the second statistical information according to the first statistical information that has changed, reference may be made to the content described in S304 above, which is not repeatedly illustrated here.

Based on the data processing method provided in the embodiment of the present application, since range partitioning may be performed on the data range formed by the column maximum value and the column minimum value in the first statistical information to obtain the plurality of discontinuous ranges, the gap between the column maximum value and the column minimum value may be narrowed, achieving the finer-grained partitioning of column statistical data, and thus enabling more accurate and smaller-range description of the data distribution features of the data table. After generating the plurality of discontinuous ranges, since the column statistical range set formed by the plurality of discontinuous ranges may be stored and used for a subsequent data query, a finer-grained judgment can be made as to whether to perform data skipping, thereby effectively filtering out invalid tables, partitions, and files, thus reducing the range of the data needing to be scanned, and improving the data query efficiency.

Based on the data processing method provided in the embodiment of the present application, an embodiment of the present application further provides a data query method, as shown in FIG. 9. FIG. 9 is a schematic flowchart of a data query method in an embodiment of the present application. The data query method shown in FIG. 9 may be executed by a big data execution engine in a computation layer 21 shown in FIG. 2. The data query method shown in FIG. 9 is described as follows.

S902: a query request is received.

When an external client or another system has a data query requirement, a query request may be sent to the big data execution engine, and the big data query engine may receive the query request. The query request may include an SQL statement, and the SQL query statement includes a query filter condition.

S904: second statistical information of a data table is acquired.

The second statistical information of the data table may be generated in advance according to first statistical information of the data table. For a specific implementation of generating the second statistical information according to the first statistical information, reference may be made to the embodiment shown in FIG. 3, which is not specifically limited here. When the query request is received, the second statistical information may be acquired. The second statistical information includes at least one of a file-level column statistical range set, a partition-level column statistical range set, or a table-level column statistical range set. For details, reference may be made to the embodiment shown in FIG. 3, which is not illustrated in detail here.

S906: a valid object is determined from the data table according to the query request and the second statistical information, wherein the valid object includes at least one of a valid table, a valid partition, or a valid file.

After receiving the query request and acquiring the second statistical information of the data table, an invalid object may be filtered out from the data table according to the query request and the second statistical information to obtain the valid object. An object may be at least one of a table, a partition, or a file. A valid object may be an object that stores target data matching a query condition, and an invalid object may be an object that does not store target data matching the query condition. In the embodiment of the present application, the valid object may include at least one of the valid table, the valid partition, or the valid file, and the invalid object may include at least one of an invalid table, an invalid partition, or an invalid file.

When determining, from the data table, the valid object according to the query request and the second statistical information, the following steps may be included:
statement parsing and analysis are performed on the query request to determine a logical plan corresponding to the query request, wherein the logical plan includes a query condition;
the query condition is converted into a query range; and
the second statistical information is queried according to the query range, and the valid object is determined from the data table according to a query result.

The query request includes an SQL query statement. When performing statement parsing and analysis on the query request, an SQL parser may be used to perform lexical analysis on the SQL statement in the query request to obtain a general symbol stream of lexical analysis, and then syntax analysis is performed on the symbol stream to construct a syntax tree. Afterwards, an SQL analyzer may continue to be used to perform deep analysis on relationships in the syntax tree that have not been fully resolved, and generate a resolved logical plan. For a specific implementation of performing lexical parsing using the SQL parser and performing syntax analysis using the SQL analyzer, reference may be made to specific implementations in the related art, which is not illustrated in detail here.

The logical plan includes a query condition. After the logical plan is obtained, the query condition in the logical plan may be converted into a query range. For example, if the SQL statement in the query request includes "salary > 500 and salary < 1000", when converted into the logical plan, it may be converted into "Greater Than(salary, 500) AND Lower Than(salary, 1000)", and further converted into a query range (500, 1000).

After the query range is obtained, the second statistical information may be queried according to the query range, and valid object is determined from the data table according to the query result.

In some implementations, the second statistical information may include at least one of a table-level column statistical range set, a partition-level column statistical range set, or a file-level column statistical range set. In this way, when querying the second statistical information according to the query range and determining the valid object according to the query result, at least one of the following items (1) to (3) may be included.

(1) In a case where the second statistical information includes the table-level column statistical range set, the table-level column statistical range set is queried according to the query result to determine a first target range set matching the query range; and a table corresponding to the first target range set is determined as a valid table.

When querying the table-level column statistical range set according to the query range, the query range may be compared with a plurality of discontinuous ranges in the table-level column statistical range set of each table to determine which table-level column statistical range set has the discontinuous range that matches the query range. In addition, the table-level column statistical range set corresponding to the matching discontinuous range is determined as the first target range set, and the table corresponding to the first target range set is determined as the valid table.

For example, if the query range is (500, 1000), a corresponding column field is salary, a table-level column statistical range set corresponding to column salary in table 1 is [1,200]∪[1500,2000], and a table-level column statistical range set corresponding to column salary in table 2 is [100,600]∪[800,3000], thus after querying the table-level column statistical range sets corresponding to column salary in table 1 and table 2 according to the query range, the obtained query result shows that the discontinuous range in the table-level column statistical range set corresponding to column salary in table 1 has no overlapping part with the query range, so they do not match, and the discontinuous range in the table-level column statistical range set corresponding to column salary in table 2 has an overlapping part with the query range, i.e., (500,600]∪[800,1000), so they match. Accordingly, according to the query result, table 1 may be determined as the invalid table, the table-level column statistical range set of table 2 may be determined as the first target range set, and table 2 may be determined as the valid table.

(2) In a case where the second statistical information includes the partition-level column statistical range set, the partition-level column statistical range set or partition-level column statistical range sets of a plurality of partitions in the valid table is queried according to the query range to determine a second target range set matching the query range; and a partition corresponding to the second target range set is determined as a valid partition.

When querying the partition-level column statistical range set according to the query range, two implementations may be included. One implementation is to query the partition-level column statistical range sets of all partitions according to the query range. The other implementation is, on the basis of a known valid table, to query the partition-level column statistical range sets of all partitions in the valid table according to the query range. The valid table may be the valid table determined according to the query range and the table-level column statistical range set as described above, or may be a valid table determined by other manners, such as a valid table obtained by performing data skipping according to the table-level column statistical information, which is not specifically limited here.

When querying the partition-level column statistical range sets of all the partitions or querying the partition-level column statistical range sets of partitions in the valid table according to the query range, the query range may be compared with a plurality of discontinuous ranges in the partition-level column statistical range set of each partition to determine which partition-level column statistical range set has the discontinuous range that matches the query range. The partition-level column statistical range set corresponding to the matching discontinuous range is determined as the second target range set, and the partition corresponding to the second target range set is determined as the valid partition.

Taking querying the partition-level column statistical range sets of all the partitions in the valid table according to the query range as an example, assuming that the query range is (500, 1000), a corresponding column field is salary, the valid table is table 2, a partition-level column statistical range set corresponding to column salary of partition 1 in table 2 is [100,200]∪[1500,3000], and a partition-level column statistical range set corresponding to column salary in partition 2 is [400,600]∪[800,2000], thus after querying the partition-level column statistical range sets corresponding to column salary in partition 1 and partition 2 according to the query range, the obtained query result shows that the discontinuous range in the partition-level column statistical range set corresponding to column salary in partition 1 has no overlapping part with the query range, so the two do not match, and the discontinuous range in the partition-level column statistical range set corresponding to column salary in partition 2 has an overlapping part with the query range, i.e., (500,600]∪[800,1000), so the two match. Accordingly, according to the query result, partition 1 may be determined as the invalid partition, the partition-level column statistical range set of partition 2 may be determined as the second target range set, and partition 2 may be determined as the valid partition.

(3) In a case where the second statistical information includes the file-level column statistical range set, the file-level column statistical range set or file-level column statistical range sets of a plurality of files in the valid partition is/are queried according to the query range to determine a third target range set matching the query range; and a file corresponding to the third target range set is determined as a valid file.

When querying the file-level column statistical range set according to the query range, two implementations may be included. One implementation is to query the file-level column statistical range sets of all files according to the query range. The other implementation is, on the basis of a known valid partition, to query the file-level column statistical range sets of files in the valid partition according to the query range. The valid partition may be the valid partition determined according to the query range and the partition-level column statistical range set as described above, or may be a valid partition determined in other manners, such as a valid partition obtained by performing data skipping according to the partition-level column statistical information, which is not specifically limited here.

When querying the file-level column statistical range sets of all the files or querying the file-level column statistical range sets of all the files in the valid partition according to the query range, the query range may be compared with a plurality of discontinuous ranges in the file-level column statistical range set of each file to determine which file-level column statistical range set has the discontinuous range that matches the query range. In addition, the file-level column statistical range set corresponding to the matching discontinuous range is determined as the third target range set, and the file corresponding to the third target range set is determined as the valid file.

Taking querying the file-level column statistical range sets of the files in the valid partition according to the query range as an example, assuming that the query range is (500, 1000), a corresponding column field is salary, the valid partition is partition 2, a file-level column statistical range set corresponding to column salary of file 1 in partition 2 is [400,500]∪[1000,2000], and a file-level column statistical range set corresponding to column salary in file 2 is [500,600]∪[800,1500], thus after querying the file-level column statistical range sets corresponding to column salary in file 1 and file 2 according to the query range, the obtained query result shows that the discontinuous range in the file-level column statistical range set corresponding to column salary in file 1 has no overlapping part with the query range, so the two do not match, and the discontinuous range in the file-level column statistical range set corresponding to column salary in file 2 has an overlapping part with the query range, i.e., (500,600]∪[800,1000), so the two match. Accordingly, according to the query result, file 1 may be determined as the invalid file, the file-level column statistical range set of file 2 may be determined as the third target range set, and file 2 may be determined as the valid file.

The above describes in detail how to determine the valid object according to the second statistical information. It should be noted that, in practical applications, if the second statistical information includes any one of the table-level column statistical range set, the partition-level column statistical range set, and the file-level column statistical range set, then when determining the valid object according to the second statistical information, the valid table, the valid partition, or the valid file may be determined based on the method described in any one of (1) to (3) above. For example, if the second statistical information includes only the partition-level column statistical range set, then when determining the valid object according to the second statistical information, the valid partition may be determined based on the method described in item (2) above. If the second statistical information includes at least two of the table-level column statistical range set, the partition-level column statistical range set, or the file-level column statistical range set, then when determining the valid object according to the second statistical information, at least two of the valid table, the valid partition, or the valid file may be determined in a top-down and step-by-step progressive manner to improve the query efficiency and accuracy. For example, if the second statistical information includes the table-level column statistical range set, the partition-level column statistical range set, and the file-level column statistical range set, then when determining the valid object according to the second statistical information, the valid table may be determined first according to the table-level column statistical range set, then the valid partition may be determined from the valid table according to the partition-level column statistical range set, and finally the valid file may be determined from the valid partition according to the file-level column statistical range set.

Optionally, in some implementations, when determining the valid object according to the second statistical information, the first statistical information may also be used in combination to jointly determine the valid object. For example, when determining the valid object, the valid table may be determined first according to the table-level column statistical range set in the second statistical information, then the valid partition may be determined from the valid table according to the partition-level column statistical range set in the second statistical information, and finally the valid file may be determined from the valid partition according to the file-level column statistical information in the first statistical information. In practical applications, whether to determine the valid table, the valid partition, or the valid file in combination with the first statistical information may be determined according to actual situations, which is not specifically limited here. For example, if the second statistical information includes only a partition-level column statistical range set, then after determining the valid partition according to the partition-level column statistical range set, the valid table may be determined from the valid partition in combination with the file-level column statistical information in the first statistical information.

Optionally, in some implementations, a column predicate range set may be determined in advance according to historical query information. After determining the valid object according to the second statistical information, the valid object may be further screened in combination with the column predicate range set, so as to filter out more invalid objects, thereby improving the query efficiency. The column predicate range set and the column statistical range set have the same structure, both being sets formed by a plurality of discontinuous ranges. The plurality of discontinuous ranges may include at least one of an open range, a closed range, a half-open range, a range without an upper bound, or a range without a lower bound, and a data type of a range value of each range includes at least one of an integral type, a floating-point type, or a character string type. The column predicate range set may include at least one of a table-level column predicate range set, a partition-level column predicate range set, and a file-level column predicate range set. The table-level column predicate range set may be used to filter valid tables, the partition-level column predicate range set may be used to screen the valid partition, and the file-level column predicate range set may be used to screen the valid file.

When screening the valid object according to the column predicate range set, optionally, in some implementations, at least one of the following items (1) to (3) may be included:
(1) in a case of determining the valid table, whether a first query function corresponding to the valid table is in an available state is judged; in a case where the first query function is in the available state, a table-level column predicate range set corresponding to the valid table is queried according to the query range to determine a fourth target range set matching the query range from the table-level column predicate range set; and a table corresponding to the fourth target range set is determined as the valid table.

The first query function may be understood as a function that queries the table-level column predicate range set according to the query range. The first query function includes an available state and an unavailable state. In the available state, it may indicate that querying the table-level column predicate range set according to the query range is allowed to screen the valid table. In the unavailable state, it may indicate that querying the table-level column predicate range set according to the query range is not allowed.

After determining the valid table according to the query range and the second statistical information, whether the first query function corresponding to the valid table is in the available state may be further judged. If the first query function is in the available state, it may indicate that further screening of the valid table using the table-level column predicate range set is allowed. In this case, the table-level column predicate range set corresponding to the valid table may be queried according to the query range to screen the valid table. When querying the table-level column predicate range set corresponding to the valid table according to the query range, the query range may be compared with a plurality of discontinuous ranges in the table-level column predicate range set to determine which table-level column predicate range set has the discontinuous range that matches the query range. The table-level column predicate range set corresponding to the matching discontinuous range is determined as the fourth target range set, and the table corresponding to the fourth target range set is determined as the valid table, thereby achieving further screening of the valid table to filter out more invalid data. If the first query function is in the unavailable state, it may indicate that further screening of the valid table using the table-level column predicate range set is not allowed. In this case, it is not necessary to perform the step of querying the table-level column predicate range set corresponding to the valid table according to the query range.

The available state and the unavailable state of the first query function may be specified by a user or determined according to actual query situations, which is not specifically limited here. In some implementations, when judging whether the first query function is in the available state, whether the first query function meets a preset condition may be judged. If the preset condition is met, it may be determined that the first query function is in the available state; and if the preset condition is not met, it may be determined that the first query function is in the unavailable state. The preset condition may include at least one of the following:
enable indication information of the first query function is received;
query efficiency is lower than specified efficiency; or
data in the table have not changed within a specified time period, or a proportion of changed data is less than a preset proportion.

The enable indication information of the first query function may be triggered by the user. In an exemplary embodiment, when there is a service needing to query the table-level column predicate range set according to the query range, the user may send the enable indication information for the first query function to an execution engine, so as to instruct to enable the first query function. After receiving the enable indication information, the execution engine may enable the first query function, at which point the first query function is in the available state. If the execution engine does not receive the enable indication information, there is no need to enable (or there is a need to disable) the first query function.

The query efficiency may be a query efficiency during current data query. The specified efficiency may be set according to actual situations and is not specifically limited here. When the query efficiency is lower than the specified efficiency, it may indicate that the number of valid tables determined according to the query range and the second statistical information is relatively large. As a result, less invalid data is skipped in current query, leading to lower query efficiency. In this case, the first query function needs to be enabled to further screen the valid table. When the query efficiency is higher than the specified efficiency, it may indicate that the number of valid tables determined according to the query range and the second statistical information is relatively small. As a result, more invalid data is skipped in current query, leading to higher query efficiency. In this case, there is no need to enable the first query function to further screen the valid table. During actual query, the execution engine may judge whether the query efficiency is lower than the specified efficiency. If so, the first query function may be enabled, at which point the first query function is in the available state. If not, there is no need to enable (or there is a need to disable) the first query function, at which point the first query function is in the unavailable state.

The table-level column predicate range set includes a plurality of discontinuous ranges, and the plurality of discontinuous ranges are obtained by performing statistics on the data in the table. If the data in the table changes, the table-level column predicate range set may not correspond to the data in the table. When screening the valid table according to the table-level column predicate range set, the valid data may be filtered out, leading to errors in the query result. Therefore, during actual query, whether the data in the table has changed within a specified time period may be judged. If the data in the table does not change, or if a proportion of changed data is less than a preset proportion (i.e., the changed data is within an acceptable range and has a minor impact on the query result), the first query function may be enabled, and in this case, the first query function may be in the available state. If the data in the table has changed, or if the proportion of changed data is greater than or equal to the preset proportion (i.e., the changed data is outside the acceptable range and has a significant impact on the query result), the first query function may not be enabled (or may be disabled), and in this case, the first query function is in the unavailable state. The specified time period and the preset proportion may be set according to actual situations and are not specifically limited here.

When judging whether the first query function is in the available state, if at least one of the above preset conditions is met, it may be determined that the first query function is in the available state. If none of the three preset conditions above is met, it may be determined that the first query function is in the unavailable state.

(2) In a case of determining the valid partition, whether a second query function corresponding to the valid partition is in an available state is judged; in a case where the second query function is in the available state, a partition-level column predicate range set corresponding to the valid partition is queried according to the query range to determine a fifth target range set matching the query range from the partition-level column predicate range set; and a partition corresponding to the fifth target range set is determined as the valid partition.

The second query function may be understood as a function that queries the partition-level column predicate range set according to the query range. The second query function includes an available state and an unavailable state. In the available state, it may indicate that querying the partition-level column predicate range set according to the query range is allowed to screen the valid partition. In the unavailable state, it may indicate that querying the partition-level column predicate range set according to the query range is not allowed.

After determining the valid partition according to the query range and the second statistical information, whether the second query function corresponding to the valid partition is in the available state may be further judged. If the second query function is in the available state, it may indicate that further screening of the valid partition using the partition-level column predicate range set is allowed. In this case, the partition-level column predicate range set corresponding to the valid partition may be queried according to the query range to screen the valid partition. When querying the partition-level column predicate range set corresponding to the valid partition according to the query range, the query range may be compared with a plurality of discontinuous ranges in the partition-level column predicate range set to determine which partition-level column predicate range set has the discontinuous range that matches the query range. The partition-level column predicate range set corresponding to the matching discontinuous range is determined as the fifth target range set, and the partition corresponding to the fifth target range set is determined as the valid partition, thereby achieving further screening of the valid partition to filter out more invalid data. If the second query function is in the unavailable state, it may indicate that further screening of the valid partition using the partition-level column predicate range set is not allowed. In this case, it is not necessary to perform the step of querying the partition-level column predicate range set corresponding to the valid partition according to the query range.

The available state and the unavailable state of the second query function may be specified by a user or determined according to actual query situations, which is not specifically limited here. In some implementations, when judging whether the second query function is in the available state, the specific implementation may be the same as the specific implementation for determining whether the first query function is in the available state described above, and thus is not described in detail here.

(3) In a case of determining the valid file, whether a third query function corresponding to the valid file is in an available state is judged; in a case where the third query function is in the available state, a file-level column predicate range set corresponding to the valid file is queried according to the query range to determine a sixth target range set matching the query range from the file-level column predicate range set; and a file corresponding to the sixth target range set is determined as the valid file.

The third query function may be understood as a function that queries the file-level column predicate range set according to the query range. The first query function includes an available state and an unavailable state. In the available state, it may indicate that querying the file-level column predicate range set according to the query range is allowed to screen the valid file. In the unavailable state, it may indicate that querying the file-level column predicate range set according to the query range is not allowed.

In a case of determining the valid file according to the query range and the second statistical information, whether the third query function corresponding to the valid file is in the available state may be further judged. If the third query function is in the available state, it may indicate that further screening of the valid file using the file-level column predicate range set is allowed. In this case, the file-level column predicate range set corresponding to the valid file may be queried according to the query range to screen the valid file. When querying the file-level column predicate range set corresponding to the valid file according to the query range, the query range may be compared with a plurality of discontinuous ranges in the file-level column predicate range set to determine which file-level column predicate range set has the discontinuous range that matches the query range. The file-level column predicate range set corresponding to the matching discontinuous range is determined as the sixth target range set, and the file corresponding to the sixth target range set is determined as the valid file, thereby achieving further screening of the valid file to filter out more invalid data. If the third query function is in the unavailable state, it may indicate that further screening of the valid file using the file-level column predicate range set is not allowed. In this case, it is not necessary to perform the step of querying the file-level column predicate range set corresponding to the valid file according to the query range.

The available state and the unavailable state of the third query function may be specified by a user or determined according to actual query situations, which is not specifically limited here. In some implementations, when judging whether the third query function is in the available state, the specific implementation may be the same as the specific implementation for determining whether the first query function is in the available state described above, and thus is not described in detail here.

The above table-level column predicate range set, partition-level column predicate range set, and file-level column predicate range set may be determined according to historical query information, and the determination manners for different column predicate range sets may be the same. The following takes the partition-level column predicate range set as an example to illustrate how to determine the partition-level column predicate range set according to the historical query information.

Optionally, in some implementations, the partition-level column predicate range set may be determined by the following manner:
acquiring historical query information obtained during historical query according to the second statistical information;
determining, according to the historical query information, whether a data selection rate of a partition is greater than a first threshold and whether the second query function is in the available state during the historical query, wherein the data selection rate of the partition is equal to a ratio of the number of partitions selected during the historical query to the total number of partitions; and
determining, in a case where the data selection rate of the partition is greater than the first threshold and the second query function is in the available state, the partition-level column predicate range set according to a historical query condition during the historical query.

The historical query information may be query information obtained when performing multiple historical queries according to the second statistical information during previous query or over a past period (which may be flexibly set according to actual situations). The historical query information may include information such as a historical query range obtained by converting according to a historical query request during the historical query, a valid partition determined according to the historical query range and the second statistical information, invalid partitions filtered out, whether a column predicate range set is used for the query (i.e., whether a query function corresponding to the column predicate range set is in an available state during the historical query), a query result, and a query efficiency. After performing the historical query and obtaining target data, information relevant to the historical query may be stored, so that during subsequent data query, the pre-stored historical query information may be acquired.

After acquiring the historical query information, the data selection rate of the partition during the historical query may be determined according to the historical query information. In the embodiment of the present application, a dataset D and a query Q are given, row r in D is relevant to Q, Dr represents a set of relevant rows in D, and D is stored as a data block (a file, a row group, a page, and/or a record, etc.), then the data selection rate may be expressed as a proportion of relevant rows scanned and read, i.e., Dr/D. Thus, when determining the data selection rate of the partition, the ratio of the number of partitions selected during the historical query to the total number of partitions may be determined as the data selection rate of the partition. Here, the number of selected partitions may be the number of partitions scanned during the historical query, which may specifically be equal to the number of valid partitions determined according to the historical query range and the second statistical information. The total number of partitions may be the total number of partitions included in a table to be queried. Generally, the smaller the data selection rate of the partition, the more data is skipped during the query, the less data is scanned, and the higher the query efficiency. The larger the data selection rate of the partition, the less data is skipped during the query, the more data is scanned, and the lower the query efficiency.

After obtaining the data selection rate of the partition, whether the data selection rate of the partition is greater than a first threshold, and whether the second query function corresponding to the partition during the historical query is in the available state may be judged. If the data selection rate of the partition is greater than the first threshold and the second query function is in the available state, it may indicate that less data is skipped during current historical query, more data is scanned, and the query efficiency is low. In this case, in order to skip more invalid data and reduce the range of the scanned data for subsequent query, thereby improving the query efficiency, the partition-level column predicate range set may be determined according to a historical query condition during the historical query. If the data selection rate of the partition is less than or equal to the first threshold, or the second query function is in the unavailable state, it may indicate that the data skipped during the query or the query efficiency is within an acceptable range. In this case, it may not be necessary to determine the partition-level column predicate range set according to the historical query condition during the historical query. The first threshold may be set according to actual situations and is not specifically limited here.

When determining the partition-level column predicate range set according to the historical query condition during the historical query, optionally, in some implementations, the following steps may be included:
the historical query condition is converted into a historical query range, and a complement range corresponding to the historical query range is determined; and
for each partition that is selected but invalid during the historical query, the following operations are performed:
determining, for a column relevant to a historical query result in the partition, one closed range according to the column maximum value and the column minimum value; and
taking an intersection of the closed range and the complement range, and determining a plurality of obtained discontinuous ranges as the partition-level column predicate range set corresponding to the column relevant to the historical query result.

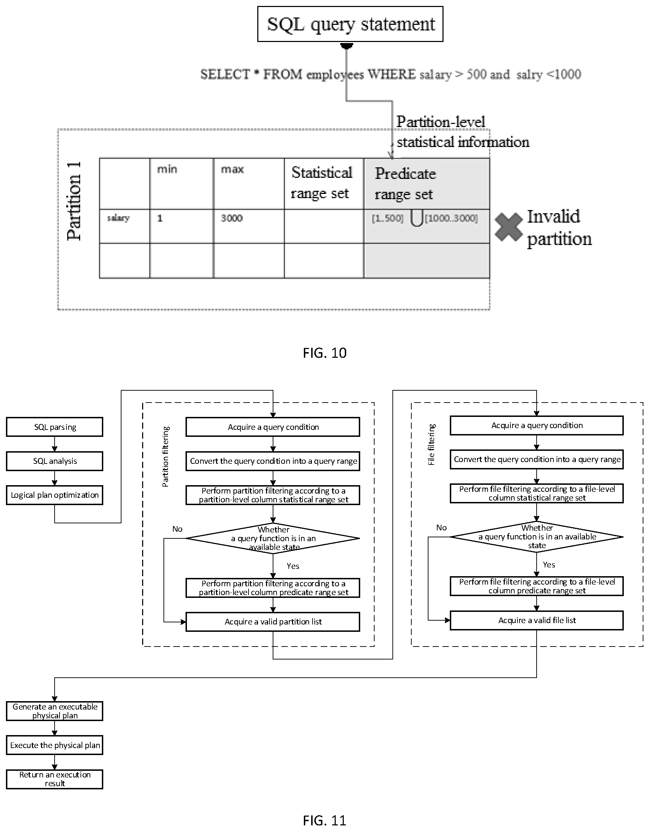

For ease of understanding, the following takes a partition shown in FIG. 10 as an example for illustration. A statistical range set shown in FIG. 10 is a partition-level column statistical range set of partition 1, and a predicate range set shown in FIG. 10 is a partition-level column predicate range set of partition 1. Both belong to partition-level statistical information of partition 1.

In FIG. 10, when performing a historical query, a SQL query statement is SELECT * FROM employees WHERE salary > 500 and salary < 1000, indicating a need to query records with a salary value greater than 500 but less than 1000, and a corresponding query range is (500,1000). When performing the data query, for partition 1, the partition is a selected invalid partition, i.e., the salary value in all records of partition 1 is not within (500, 1000). Then, when determining the column predicate range set corresponding to column salary of partition 1, the following steps may be included.

Step 1: a complement range (-∞, 500]∪[1000, +∞) of the historical query range (500, 1000) is determined.

Step 2: a closed range [1, 3000] is obtained according to a column maximum value and a column minimum value of column salary in partition 1.

Step 3: an intersection of the complement range (-∞, 500]∪[1000, +∞) and the closed range [1, 3000] is taken to obtain a plurality of discontinuous ranges [1, 500] and [1000, 3000], and a set [1, 500]∪[1000, 3000] formed by these two ranges is the partition-level column predicate range set corresponding to column salary of partition 1.

According to the partition-level column predicate range set corresponding to column salary, it can be seen that a skip-able data range corresponding to the column salary is expanded from the original (-∞, 1)∪(3000, +∞) to (-∞, 1)∪(500, 1000)∪(3000, +∞). The skip-able data range is expanded to 150% of the original data range, so that the invalid range can be filtered out more precisely.

Optionally, in some implementations, if, when determining the partition-level column predicate range set for a certain column, the column already has the partition-level column predicate range set, the existing partition-level column predicate range set may be merged with the plurality of discontinuous ranges above determined according to the closed range and the complement range, and the merged result may be determined as the partition-level column predicate range set corresponding to the column. For example, if the existing partition-level column predicate range set for partition 1 in FIG. 10 above is [-100, 100], then [-100, 100] may be merged with [1, 500] and [1000, 3000], and the range set [-100, 500]∪[1000, 3000] obtained by merging may be taken as the partition-level column predicate range set corresponding to column salary.

After obtaining the partition-level column predicate range set corresponding to a certain column in the partition based on the method recorded above, the partition-level column predicate range set corresponding to the column may be stored. When storing, optionally, the partition-level column predicate range set corresponding to the column may be stored as extended information of the partition-level column statistical range set corresponding to the column. As shown in FIG. 10, after obtaining the partition-level column predicate range set corresponding to column salary, the partition-level column predicate range set may be stored as the extended information of the partition-level column statistical range set of column salary in partition 1, i.e., a column is newly added to the right side of the partition-level column statistical range set of column salary to store the partition-level column predicate range set of column salary.

The above describes in detail how to determine the partition-level column predicate range set according to the historical query information. Based on the same method, a table-level column predicate range set and a file-level column predicate range set may be generated (the table-level column predicate range set may be generated by replacing partition in the generation process of the partition-level column predicate range set with table, and the file-level column predicate range set may be generated by replacing partition in the generation process of the partition-level column predicate range set with file). Detailed description of how to generate the table-level column predicate range set and the file-level column predicate range set is omitted here. Optionally, after generating the table-level column predicate range set and the file-level column predicate range set, the table-level column predicate range set and the file-level column predicate range set may also be stored based on the storage method for the partition-level column predicate range set, which is also not illustrated in detail here.

After the table-level column predicate range set, the partition-level column predicate range set, and the file-level column predicate range set are generated, when performing the data query, after the valid object is determined according to the column statistical range set, the valid object may be further screened according to the column predicate range set in a case where the query function corresponding to the column predicate range set is in the available state. In this way, through the complementation between the column statistical range set and the column predicate range set, the data distribution of the partition can be more precisely characterized, invalid data can be filtered out, and the query efficiency can be improved.

S908: target data corresponding to the query request is queried from the valid object.

After determining the valid object based on the method recorded in S906, the valid object may be scanned, and the target data corresponding to the query request may be queried from the valid object.

When querying, from the valid object, the target data corresponding to the query request, the following steps may be included:
the logical plan is converted into an executable physical plan; and
the target data corresponding to the query request is queried from the valid object according to the physical plan.

For a specific implementation of converting the logical plan into the executable physical plan, reference may be made to specific implementations in the related art, which is not illustrated in detail here. After obtaining the physical plan, the execution engine may execute the physical plan, and upon completion of execution, the target data may be obtained by querying from the valid object. After obtaining the target data by the query, the target data may be returned to a sender of the query request.

Optionally, in some implementations, after obtaining the target data by the query, relevant query information may be determined according to the situations of the current data query, and at least one of the table-level column range set, the partition-level column predicate range set, or the file-level column predicate range set may be updated according to the query information. The query information of current data query may include a data selection rate for the table, a data selection rate for the partition, a data selection rate for the file during current query, whether the table-level column range set, the partition-level column predicate range set, and the file-level column predicate range set are used during the query, the query efficiency, and the like. For a specific implementation of updating the column predicate range set according to the query information, reference may be made to the specific implementation recorded in S906 above for determining the column predicate range set according to historical query information, which is not illustrated in detail here.

To facilitate understanding of how to perform the data query according to the column statistical range set and the column predicate range set, a more specific implementation is described below. Please refer to FIG. 11.

In an embodiment shown in FIG. 11, when performing the data query, it is necessary to filter the partition and the file to obtain the valid partition and the valid file. The following steps may be specifically included.

Step 1: an SQL parser is used to parse the SQL query statement in the query request.

Step 2: an SQL analyzer is used to analyze a parsing result.

Step 3: a logical plan is generated and optimized according to an analysis result, so as to obtain the query range.

Step 4: the partition is filtered to obtain the valid partition.

When filtering the partition, a query condition may be first acquired, and the query condition is converted into the query range. Then, the partition-level column statistical range set is queried according to the query range, and invalid partition is filtered according to the query result to obtain the valid partition. Afterwards, whether the query function corresponding to the partition is in the available state may be judged. If yes, the partition-level column predicate range set may be queried according to the query range to further screen the valid partition. If not, there is no need to perform the operation of querying the partition-level column predicate range set according to the query range.

Step 5: the file in the valid partition is filtered to obtain the valid file.

Here, the valid partition may be the valid partition obtained in the previous step by filtering according to the column statistical range set, or the valid partition obtained in the previous step by filtering according to the column statistical range set and the column predicate range set. When filtering the file in the valid partition, a query condition may be first acquired, and the query condition is converted into the query range. Then, the file-level column statistical range set is queried according to the query range, and the invalid file in the valid partition is filtered according to the query result to obtain the valid file. Afterwards, whether the query function corresponding to the file is in the available state may be judged. If yes, the file-level column predicate range set may be queried according to the query range to further screen the valid file. If not, there is no need to perform the operation of querying the file-level column predicate range set according to the query range.

Step 6: an executable physical plan is generated.

Step 7: the physical plan is executed to query the target data from the valid file.

Optionally, after obtaining the target data, the data selection rates for the partition and the file may further be determined according to the relevant information of current query, and then the partition-level column predicate range set and/or the file-level column predicate range set may be updated.

Step 8: an execution result is returned.

For specific implementations of the above steps 1 to 8, reference may be made to the specific implementations of the corresponding steps in S902 to S908 described above, which will not be repeated here.

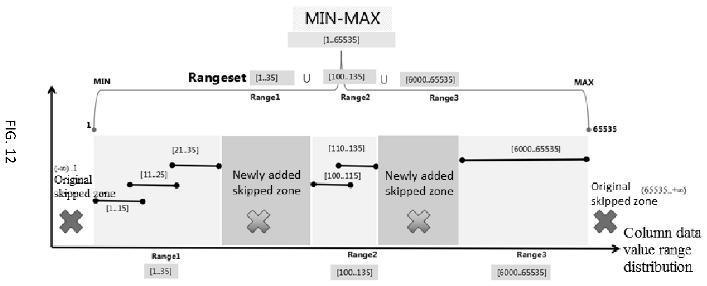

By performing the data query based on the column statistical range set or the column statistical range set and the column predicate range set provided in the embodiment of the present application, more invalid data can be filtered out, thereby improving the query efficiency. For ease of understanding, taking performing of the data query based on the column statistical range set as an example, reference may be made to FIG. 12.

In FIG. 12, there are three files under a certain partition in total. The MIN-MAX values of the three files are [1, 35], [100, 135], and [6000, 65535], respectively. In the related art, for example, zone map uses statistical data [1, 65535] to describe the data distribution of the partition. However, the embodiment of the present application uses a column statistical range set (abbreviated as a range set in FIG. 12) formed by three discontinuous ranges, [1, 35], [100, 135], and [6000, 65535] to describe the data distribution of the partition. The interval range between the discontinuous ranges is a data skip region, where no column values are distributed, allowing for partition pruning.

The column statistical range set generated in the embodiment of the present application is [1, 35]∪[100, 135]∪[6000, 65535]. When performing the data query, if a range of a query filter condition value falls within the data skip region (-∞, 1)∪(35, 100)∪(135, 6000)∪(65535, +∞), the partition or the file may be directly skipped. While the data skip region in the related art is (-∞, 1)∪(65535, +∞). Apparently, the range of the data skip region in the present application is twice as large as that in the related art, which can effectively reduce the scanning of data files during the query process and further improve the query efficiency. For example, if the range of the query filter condition value is (500, 1000), then the data skip region based on the present application can skip the partition, whereas the data skip region based on the related art cannot skip the partition. Thus, it can be seen that the column statistical range set generated based on the present application can skip more invalid data, thereby reducing the range of the scanned data and improving the query efficiency.

Based on the technical solutions provided in the embodiment of the present application, since range partitioning may be performed on the data range formed by the column maximum value and the column minimum value in the first statistical information to obtain the plurality of discontinuous ranges, the gap between the column maximum value and the column minimum value may be narrowed, achieving the finer-grained partitioning of column statistical data, and thus enabling more accurate and smaller-range description of the data distribution features of the data table. After generating the plurality of discontinuous ranges, when performing the data query, since the data query may be performed through the column statistical range set formed by the plurality of discontinuous ranges, a finer-grained judgment can be made to whether to perform data skipping, thereby effectively filtering out the invalid tables, partitions, and files, thus reducing the range of the data needing to be scanned, and improving the data query efficiency.

The specific embodiments of the present application are described above. Other embodiments are within the scope of the appended claims. In some cases, the actions or steps recorded in the claims may be executed in a sequence different from that of the embodiment and may still achieve expected results. In addition, the process depicted in the accompanying drawings does not necessarily require a particular order or sequential order shown to achieve the expected results. In some implementation, multitasking and parallel processing may be possible or may be advantageous.

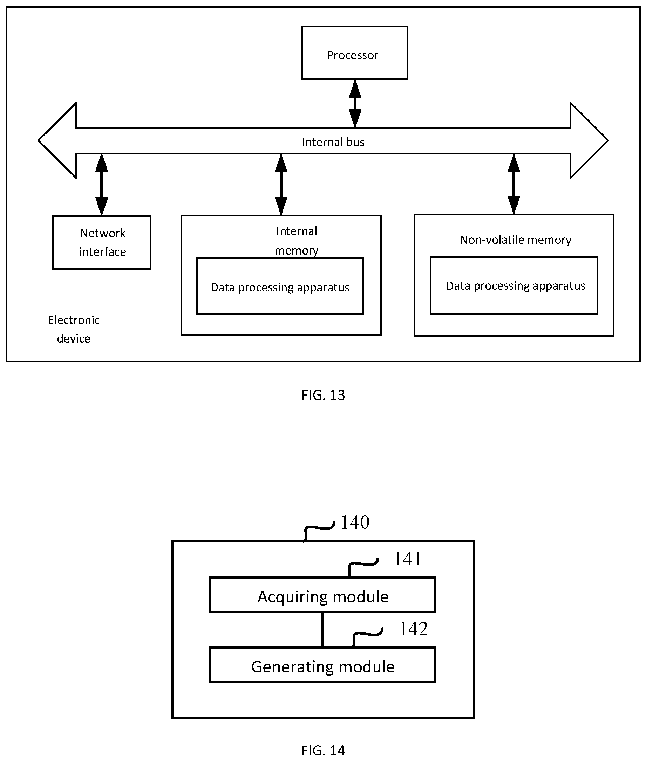

FIG. 13 is a schematic structural diagram of an electronic device according to an embodiment of the present application. Referring to FIG. 13, at a hardware level, the electronic device includes a processor, optionally further includes an internal bus, a network interface, and a memory. The memory may include an internal memory such as a high-speed random-access memory (RAM), or a non-volatile memory such as at least one disk memory. Of course, the electronic device may also include hardware required for other services.

The processor, the network interface, and the memory may be interconnected by the internal bus, and the internal bus may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, only one bi-directional arrow is shown in FIG. 13, but it does not indicate only one bus or one type of bus.

The memory is configured to store a program. In an exemplary embodiment, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form a data processing apparatus at a logical level. The processor executes the program stored in the memory and is specifically configured to perform the following operations:
acquiring first statistical information, wherein the first statistical information includes column statistical information obtained after performing statistics on columns of a data table, and the column statistical information includes a column maximum value and a column minimum value; and
generating second statistical information for a data query according to the first statistical information, wherein the second statistical information includes a column statistical range set, the column statistical range set includes a plurality of discontinuous ranges, and the plurality of discontinuous ranges are obtained after performing range partitioning on a data range formed by the column maximum value and the column minimum value in the column statistical information.

The above method performed by the data processing apparatus disclosed in the embodiment shown in FIG. 13 of the present application may be applied to the processor or implemented by the processor. The processor may be an integrated circuit chip having a signal processing capability. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The various methods, steps, and logic block diagrams disclosed in the present application may be implemented or performed. The general-purpose processor may be a microprocessor or this processor may also be any conventional processor, etc. The steps of the method disclosed in conjunction with the present application may be directly embodied to be executed and completed by a hardware decoding processor, or may be executed and completed through a combination of hardware and software modules in the decoding processor. A software module may be located in a random access memory, a flash memory, a read only memory, a programmable read only memory, or an electrically erasable programmable memory, a register and other mature storage mediums in the art. The storage medium is located in the memory. The processor reads information in the memory and completes the steps of the above method in combination with hardware thereof.

The electronic device may further perform the method shown in FIG. 3 and implement the functions of the data processing apparatus in the embodiment shown in FIG. 3, which is not repeated here in the present application.

Certainly, in addition to the software implementations, the electronic device of the present application does not exclude other implementations, such as logic devices or combinations of software and hardware, that is, an execution body of the following process flows is not limited to each logic unit, but may be hardware or logic devices.

The present application further provides a computer-readable storage medium. The computer-readable storage medium stores one or more programs. The one or more programs include instructions, and the instructions, when executed by a portable electronic device including a plurality of application programs, cause the portable electronic device to perform the methods in the embodiments shown in FIG. 3 and be specifically configured to perform the following operations:
acquiring first statistical information, wherein the first statistical information includes column statistical information obtained after performing statistics on columns of a data table, and the column statistical information includes a column maximum value and a column minimum value; and
generating second statistical information for a data query according to the first statistical information, wherein the second statistical information includes a column statistical range set, the column statistical range set includes a plurality of discontinuous ranges, and the plurality of discontinuous ranges are obtained after performing range partitioning on a data range formed by the column maximum value and the column minimum value in the column statistical information.

FIG. 14 is a schematic structural diagram of a data processing apparatus 140 in an embodiment of the present application. Please refer to FIG. 14, in a software implementation, the data processing apparatus 140 may include an acquiring module 141 and a generating module 142, wherein,
the acquiring module 141 acquires first statistical information, wherein the first statistical information includes column statistical information obtained after performing statistics on columns of a data table, and the column statistical information includes a column maximum value and a column minimum value; and
the generating module 142 generates second statistical information for a data query according to the first statistical information, wherein the second statistical information includes a column statistical range set, the column statistical range set includes a plurality of discontinuous ranges, and the plurality of discontinuous ranges are obtained after performing range partitioning on a data range formed by the column maximum value and the column minimum value in the column statistical information.

The data processing apparatus 140 provided in the present application may further perform the method shown in FIG. 3 and implement the functions of the data processing apparatus 140 in the embodiment shown in FIG. 3, which is not repeated here in the present application.

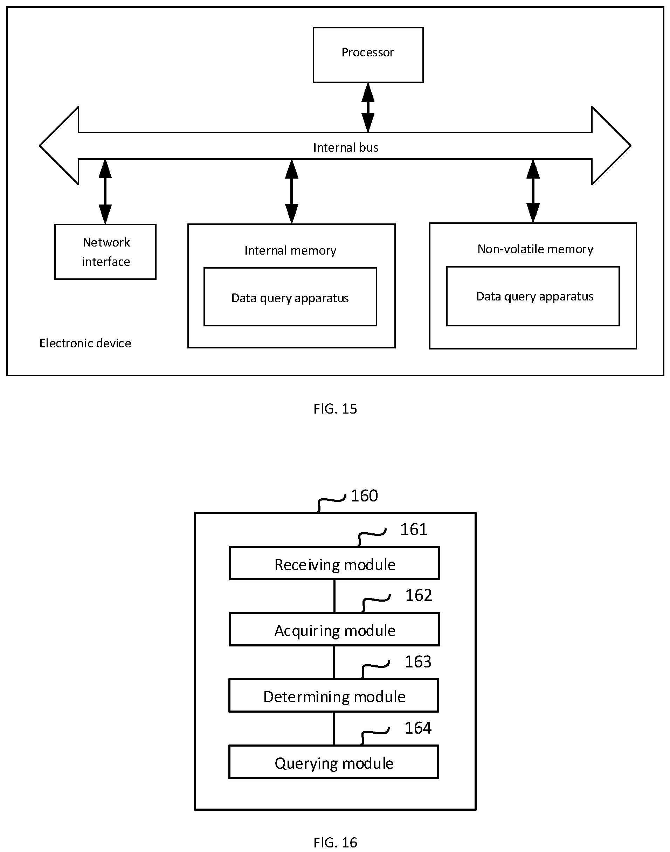

FIG. 15 is a schematic structural diagram of an electronic device according to an embodiment of the present application. Referring to FIG. 15, at a hardware level, the electronic device includes a processor, optionally further includes an internal bus, a network interface, and a memory. The memory may include an internal memory such as a high-speed random-access memory (RAM), or a non-volatile memory such as at least one disk memory. Of course, the electronic device may also include hardware required for other services.

The processor, the network interface, and the memory may be interconnected by the internal bus, and the internal bus may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, only one bi-directional arrow is shown in FIG. 15, but it does not indicate only one bus or one type of bus.

The memory is configured to store a program. In an exemplary embodiment, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form a data query apparatus at a logical level. The processor executes the program stored in the memory and is specifically configured to perform the following operations:
receiving a query request;
acquiring second statistical information of a data table;
determining, from the data table, a valid object according to the query request and the second statistical information, wherein the valid object includes at least one of a valid table, a valid partition, or a valid file; and
querying, from the valid object, target data corresponding to the query request.

The above method performed by the data query apparatus disclosed in the embodiment shown in FIG. 15 of the present application may be applied to the processor or implemented by the processor. The processor may be an integrated circuit chip having a signal processing capability. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The various methods, steps, and logic block diagrams disclosed in the present application may be implemented or performed. The general-purpose processor may be a microprocessor or this processor may also be any conventional processor, etc. The steps of the method disclosed in conjunction with the present application may be directly embodied to be executed and completed by a hardware decoding processor, or may be executed and completed through a combination of hardware and software modules in the decoding processor. A software module may be located in a random access memory, a flash memory, a read only memory, a programmable read only memory, or an electrically erasable programmable memory, a register and other mature storage mediums in the art. The storage medium is located in the memory. The processor reads information in the memory and completes the steps of the above method in combination with hardware thereof.

The electronic device may further perform the method shown in FIG. 9 and implement the functions of the data query apparatus in the embodiment shown in FIG. 9, which is not repeated here in the present application.

Certainly, in addition to the software implementations, the electronic device of the present application does not exclude other implementations, such as logic devices or combinations of software and hardware, that is, an execution body of the following process flows is not limited to each logic unit, but may be hardware or logic devices.

The present application further provides a computer-readable storage medium. The computer-readable storage medium stores one or more programs. The one or more programs include instructions, and the instructions, when executed by a portable electronic device including a plurality of application programs, cause the portable electronic device to perform the methods in the embodiments shown in FIG. 9 and be specifically configured to perform the following operations:
receiving a query request;
acquiring second statistical information of a data table;
determining, from the data table, a valid object according to the query request and the second statistical information, wherein the valid object includes at least one of a valid table, a valid partition, or a valid file; and
querying, from the valid object, target data corresponding to the query request.

FIG. 16 is a schematic structural diagram of a data query apparatus 160 in an embodiment of the present application. Referring to FIG. 16, in one software implementation, the data query apparatus 160 may include: a receiving module 161, an acquiring module 162, a determining module 163, and a query module 164, wherein
the receiving module 161 receives a query request;
the acquiring module 162 acquires second statistical information of a data table;
the determining module 163 determines, from the data table, a valid object according to the query request and the second statistical information, wherein the valid object includes at least one of a valid table, a valid partition, or a valid file; and
the query module 164 queries, from the valid object, target data corresponding to the query request.

The data query apparatus 160 provided in the present application may further perform the method shown in FIG. 9 and implement the functions of the data query apparatus 160 in the embodiment shown in FIG. 9, which is not repeated here in the present application.

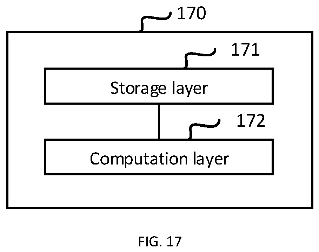

FIG. 17 is a schematic structural diagram of a data processing and query system 170 in an embodiment of the present application. Referring to FIG. 17, the data processing and query system 170 may include a storage layer 171 and a computation layer 172, wherein
the storage layer 171 acquires first statistical information, wherein the first statistical information includes column statistical information obtained after performing statistics on columns of a data table, and the column statistical information includes a column maximum value and a column minimum value; and generates second statistical information for a data query according to the first statistical information, wherein the second statistical information includes a column statistical range set, the column statistical range set includes a plurality of discontinuous ranges, and the plurality of discontinuous ranges are obtained after performing range partitioning on a data range formed by the column maximum value and the column minimum value in the column statistical information; and
the computation layer 172 receives a query request; acquires the second statistical information; determines, from the data table, a valid object according to the query request and the second statistical information, wherein the valid object includes at least one of a valid table, a valid partition, or a valid file; and queries, from the valid object, target data corresponding to the query request.

In the embodiments of the present application, for the specific implementation of each step performed by the storage layer 171, reference may be made to the specific implementation of the corresponding steps in the embodiment shown in FIG. 3, which can achieve the same technical effects and will not be described in detail here. For the specific implementation of each step performed by the computation layer 172, reference may be made to the specific implementation of the corresponding steps in the embodiment shown in FIG. 9, which can achieve the same technical effects and will not be described in detail here.

In total, the above is merely preferred embodiments of the present application and is not intended to limit the scope of protection of the present application. Any modification, equivalent replacement, improvement and the like made within the spirit and principle of the present application shall all be contained in the scope of protection of the present application.

The system, device, module or unit illustrated in the above embodiments may be specifically embodied by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. Information can be computer-readable instructions, data structures, modules of programs, or other data. Examples of the computer storage medium include, but are not limited to, a phase-change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical storage and magnetic cassette tape, magnetic-tape magnetic-disk storage or other magnetic storage devices or any other non-transmission media, and may be used to store information that can be accessed by a computing apparatus. According to the definition herein, the computer-readable medium does not include transitory media, such as modulated data signals and carriers.

It should further be noted that, the terms "include", "comprise" or any other variants thereof are intended to cover non-exclusive inclusion, so that a process, method, article or apparatus including a series of elements not only includes those elements, but also includes other elements not clearly listed, or also includes elements inherent to this process, method, article or apparatus. Without further restrictions, the elements defined by the sentence "including a..." do not exclude that there are other same elements in the process, method, article or device including the elements.

The various embodiments in the present application are described in a progressive manner, and the same or similar parts between the various embodiments can be referred to each other. Each embodiment focuses on contents different from other embodiments. In particular, as for the system embodiments, as they are basically similar to the method embodiments, the description is relatively simple. As for related parts, please refer to part of the description in the method embodiments.

## Claims

1. A data processing method, comprising:
acquiring first statistical information, wherein the first statistical information comprises column statistical information obtained after performing statistics on columns of a data table, and the column statistical information comprises a column maximum value and a column minimum value; and
generating second statistical information for a data query according to the first statistical information, wherein the second statistical information comprises a column statistical range set, the column statistical range set comprises a plurality of discontinuous ranges, and the plurality of discontinuous ranges are obtained after performing range partitioning on a data range formed by the column maximum value and the column minimum value in the column statistical information.

2. The data processing method according to claim 1, wherein a storage granularity of the data table comprises at least one of a table, a partition, or a file, and the first statistical information comprises at least one of table-level column statistical information, partition-level column statistical information, or file-level column statistical information;
wherein the table-level column statistical information is column statistical information obtained after performing statistics on the columns of the data table according to the table;
the partition-level column statistical information is column statistical information obtained after performing statistics on the columns of the data table according to the partition; and
the file-level column statistical information is column statistical information obtained after performing statistics on the columns of the data table according to the file.

3. The data processing method according to claim 1 or 2, wherein acquiring the first statistical information comprises:
acquiring the first statistical information from a metadata table or a metadata file via an application programming interface (API) manner.

4. The data processing method according to claim 2, wherein generating the second statistical information for the data query according to the first statistical information comprises:
generating, in a case where the first statistical information comprises the file-level column statistical information, at least one of a file-level column statistical range set or a partition-level column statistical range set according to the file-level column statistical information, wherein the second statistical information comprises at least one of the file-level column statistical range set or the partition-level column statistical range set; and
generating, in a case where the first statistical information comprises the partition-level column statistical information, a table-level column statistical range set according to the partition-level column statistical information, wherein the second statistical information comprises the table-level column statistical range set.

5. The data processing method according to claim 4, wherein the file-level column statistical information comprises a column maximum value and a column minimum value of each column in each row group of each file; and generating the file-level column statistical range set according to the file-level column statistical information comprises:
performing, for each file, the following operations:
acquiring a column maximum value and a column minimum value of each column comprised by each row group in the file;
determining, for each column in each row group, one closed range according to the column maximum value and the column minimum value; and
merging, for each column, a plurality of closed ranges corresponding to the column in a plurality of row groups of the file, and determining a plurality of discontinuous ranges obtained by merging as the file-level column statistical range set corresponding to the column.

6. The data processing method according to claim 4, wherein the file-level column statistical information comprises a column maximum value and a column minimum value of each column of each file in each partition; and generating the partition-level column statistical range set according to the file-level column statistical information comprises:
performing, for each partition, the following operations:
acquiring a column maximum value and a column minimum value of each column comprised by each file in the partition;
determining, for each column in each file, one closed range according to the column maximum value and the column minimum value; and
merging, for each column, a plurality of closed ranges corresponding to the column in a plurality of files of the partition, and determining a plurality of discontinuous ranges obtained by merging as the partition-level column statistical range set corresponding to the column.

7. The data processing method according to claim 4, wherein the partition-level column statistical information comprises a column maximum value and a column minimum value of each column in each partition; and generating the table-level column statistical range set according to the partition-level column statistical information comprises:
performing, for each table, the following operations:
acquiring a column maximum value and a column minimum value of each column comprised by each partition in the table;
determining, for each column in each partition, one closed range according to the column maximum value and the column minimum value; and
merging, for each column, a plurality of closed ranges corresponding to the column in a plurality of partitions of the table, and determining a plurality of discontinuous ranges obtained by merging as the table-level column statistical range set corresponding to the column.

8. The data processing method according to any one of claims 4 to 7, further comprising:
generating, in a case of generating the file-level column statistical range set according to the file-level column statistical information, the partition-level column statistical range set according to the file-level column statistical range set; and
generating, in a case of generating the partition-level column statistical range set according to the file-level column statistical information or the file-level column statistical range set, the table-level column statistical range set according to the partition-level column statistical range set.

9. The data processing method according to claim 8, wherein the file-level column statistical range set comprises column statistical range sets of a plurality of files, and the column statistical range set of each file comprises a file-level column statistical range set corresponding to each column in the file; and generating the partition-level column statistical range set according to the file-level column statistical range set comprises:
performing, for each partition, the following operations:
acquiring the file-level column statistical range set corresponding to each column comprised by each file in the partition; and
merging, for each column, a plurality of file-level column statistical range sets corresponding to the column in a plurality of files of the partition, and determining a plurality of discontinuous ranges obtained by merging as the partition-level column statistical range set corresponding to the column.

10. The data processing method according to claim 8, wherein the partition-level column statistical range set comprises column statistical range sets of a plurality of partitions, and the column statistical range set of each partition comprises a partition-level column statistical range set corresponding to each column in the partition; and generating the table-level column statistical range set according to the partition-level column statistical range set comprises:
performing, for each table, the following operations:
acquiring the partition-level column statistical range set corresponding to each column comprised by each partition in the table; and
merging, for each column, a plurality of partition-level column statistical range sets corresponding to the column in a plurality of partitions of the table, and determining a plurality of discontinuous ranges obtained by merging as the table-level column statistical range set corresponding to the column.

11. The data processing method according to any one of claims 1, 5 to 7, and 9 to 10, wherein the plurality of discontinuous ranges comprise at least one of an open range, a closed range, a half-open range, a range without an upper bound, or a range without a lower bound, and a data type of a range value of each range comprises at least one of an integral type, a floating-point type, or a character string type.

12. The data processing method according to claim 1, after generating the second statistical information for the data query according to the first statistical information, further comprising:
storing the second statistical information as extended information of the first statistical information; or,
storing the second statistical information independently of the first statistical information.

13. A data query method, comprising:
receiving a query request;
acquiring second statistical information of a data table, wherein the second statistical information is obtained based on the data processing method according to any one of claims 1 to 12;
determining, from the data table, a valid object according to the query request and the second statistical information, wherein the valid object comprises at least one of a valid table, a valid partition, or a valid file; and
querying, from the valid object, target data corresponding to the query request.

14. The data query method according to claim 13, wherein determining, from the data table, the valid object according to the query request and the second statistical information comprises:
performing statement parsing and analysis on the query request to determine a logical plan corresponding to the query request, wherein the logical plan comprises a query condition;
converting the query condition into a query range; and
querying the second statistical information according to the query range, and determining the valid object from the data table according to a query result.

15. The data query method according to claim 14, wherein the second statistical information comprises at least one of a table-level column statistical range set, a partition-level column statistical range set, or a file-level column statistical range set; and querying the second statistical information according to the query range, and determining the valid object from the data table according to the query result comprise at least one of the following:
querying the table-level column statistical range set according to the query range to determine a first target range set matching the query range; and determining a table corresponding to the first target range set as a valid table;
querying the partition-level column statistical range set or partition-level column statistical range sets of a plurality of partitions in the valid table according to the query range to determine a second target range set matching the query range; and determining a partition corresponding to the second target range set as a valid partition; or
querying the file-level column statistical range set or file-level column statistical range sets of a plurality of files in the valid partition according to the query range to determine a third target range set matching the query range; and determining a file corresponding to the third target range set as a valid file.

16. The data query method according to claim 15, further comprising at least one of the following:
judging, in a case of determining the valid table, whether a first query function corresponding to the valid table is in an available state; querying, in a case where the first query function is in the available state, a table-level column predicate range set corresponding to the valid table according to the query range to determine a fourth target range set matching the query range from the table-level column predicate range set; and determining a table corresponding to the fourth target range set as the valid table;
judging, in a case of determining the valid partition, whether a second query function corresponding to the valid partition is in an available state; querying, in a case where the second query function is in the available state, a partition-level column predicate range set corresponding to the valid partition according to the query range to determine a fifth target range set matching the query range from the partition-level column predicate range set; and determining a partition corresponding to the fifth target range set as the valid partition; or
judging, in a case of determining the valid file, whether a third query function corresponding to the valid file is in an available state; querying, in a case where the third query function is in the available state, a file-level column predicate range set corresponding to the valid file according to the query range to determine a sixth target range set matching the query range from the file-level column predicate range set; and determining a file corresponding to the sixth target range set as the valid file.

17. The data query method according to claim 16, wherein the first query function is in the available state in a case of meeting a preset condition; and the preset condition comprises at least one of the following:
enable indication information of the first query function is received;
query efficiency is lower than specified efficiency; or
data in the table have not changed within a specified time period, or a proportion of changed data is less than a preset proportion.

18. The data query method according to claim 16, wherein the partition-level column predicate range set is determined in the following manners:
acquiring historical query information obtained during historical query according to the second statistical information;
determining, according to the historical query information, whether a data selection rate of a partition is greater than a first threshold and whether the second query function is in the available state during the historical query, wherein the data selection rate of the partition is equal to a ratio of the number of partitions selected during the historical query to the total number of partitions; and
determining, in a case where the data selection rate of the partition is greater than the first threshold and the second query function is in the available state, the partition-level column predicate range set according to a historical query condition during the historical query.

19. The data query method according to claim 18, wherein determining the partition-level column predicate range set according to the historical query condition during the historical query comprises:
converting the historical query condition into a historical query range, and determining a complement range corresponding to the historical query range; and
performing, for each partition that is selected but invalid during the historical query, the following operations:
determining, for a column relevant to a historical query result in the partition, one closed range according to the column maximum value and the column minimum value; and
taking an intersection of the closed range and the complement range, and determining a plurality of obtained discontinuous ranges as the partition-level column predicate range set corresponding to the column.

20. The data query method according to claim 19, after obtaining the partition-level column predicate range set corresponding to the column, further comprising:
storing the partition-level column predicate range set corresponding to the column as extended information of the partition-level column statistical range set corresponding to the column.

21. The data query method according to any one of claims 14 to 16, wherein querying, from the valid object, the target data corresponding to the query request comprises:
converting the logical plan into an executable physical plan; and
querying, from the valid object, the target data corresponding to the query request according to the physical plan.

22. A data processing and query system, comprising a storage layer and a computation layer, wherein:
the storage layer acquires first statistical information, wherein the first statistical information comprises column statistical information obtained after performing statistics on columns of a data table, and the column statistical information comprises a column maximum value and a column minimum value; and generates second statistical information for a data query according to the first statistical information, wherein the second statistical information comprises a column statistical range set, the column statistical range set comprises a plurality of discontinuous ranges, and the plurality of discontinuous ranges are obtained after performing range partitioning on a data range formed by the column maximum value and the column minimum value in the column statistical information; and
the computation layer receives a query request; acquires the second statistical information; determines, from the data table, a valid object according to the query request and the second statistical information, wherein the valid object comprises at least one of a valid table, a valid partition, or a valid file; and queries, from the valid object, target data corresponding to the query request.

23. An electronic device, comprising:
a processor; and
a memory, configured to store processor-executable instructions;
wherein the processor is configured to execute the instructions, so as to implement the method according to any one of claims 1 to 21.

24. A computer-readable storage medium, wherein instructions in the storage medium, when executed by a processor of an electronic device, cause the electronic device to be able to perform the method according to any one of claims 1 to 21.
